(19) Europäisches Patentamt / European Patent Office / Office européen des brevets

(11) **EP 3 440 756 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **17716172.6**

(22) Anmeldetag: **05.04.2017**

(51) Internationale Patentklassifikation (IPC):
**H02J 3/38** (2006.01)  **F03D 7/04** (2006.01)
**H02J 3/00** (2006.01)  **F03D 9/25** (2016.01)

(52) Gemeinsame Patentklassifikation (CPC):
**F03D 7/048; F03D 9/257; H02J 3/0012; H02J 3/381;** H02J 3/388; H02J 2300/10; H02J 2300/28; Y02E 10/72; Y02E 10/76

(86) Internationale Anmeldenummer:
**PCT/EP2017/058082**

(87) Internationale Veröffentlichungsnummer:
**WO 2017/174644 (12.10.2017 Gazette 2017/41)**

(54) **VERFAHREN, WINDENERGIEANLAGE, UND WINDPARK MIT MEHREREN WIDENERGIEANLAGEN ZUM EINSPEISEN ELEKTRISCHER LEISTUNG**

METHOD, WIND TURBINE, AND WIND PARK WITH SEVERAL WIND TURBINES FOR FEEDING ELECTRIC POWER

PROCÉDÉ, ÉOLIENNE, ET PARC À ÉOLIENNES POUR INJECTION D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.04.2016 DE 102016106215**

(43) Veröffentlichungstag der Anmeldung:
**13.02.2019 Patentblatt 2019/07**

(73) Patentinhaber: **Wobben Properties GmbH 26607 Aurich (DE)**

(72) Erfinder: **BROMBACH, Johannes 13437 Berlin (DE)**

(74) Vertreter: **Eisenführ Speiser Patentanwälte Rechtsanwälte PartGmbB Postfach 10 60 78 28060 Bremen (DE)**

(56) Entgegenhaltungen:
EP-A1- 2 921 698     EP-A1- 2 999 076
EP-A2- 2 790 287     DE-A1-102013 222 452
US-A1- 2015 159 627     US-A1- 2015 240 784

- **CHERRY YUEN ET AL: "The Provision of Frequency Control Reserves From Multiple Microgrids", 1 January 2011 (2011-01-01), IEEE TRANSACTIONS ON INDUSTRIAL ELECTRONICS, IEEE SERVICE CENTER, PISCATAWAY, NJ, USA, PAGE(S) 173 - 183, XP011338444, ISSN: 0278-0046**
- **LIYAN QU ET AL: "Constant Power Control of DFIG Wind Turbines With Supercapacitor Energy Storage", IEEE TRANSACTIONS ON INDUSTRY APPLICATIONS, IEEE SERVICE CENTER, PISCATAWAY, NJ, US, vol. 47, no. 1, 1 January 2011 (2011-01-01), pages 359-367, XP011342206, ISSN: 0093-9994, DOI: 10.1109/TIA.2010.2090932**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Einspeisen elektrischer Leistung in ein elektrisches Versorgungsnetz. Außerdem betrifft die vorliegende Erfindung eine Windenergieanlage zum Einspeisen elektrischer Leistung in ein elektrisches Versorgungsnetz. Die vorliegende Erfindung betrifft auch einen Windpark mit mehreren Windenergieanlagen, um mit diesem Windpark in ein elektrisches Versorgungsnetz einzuspeisen.

Das Einspeisen elektrischer Leistung mittels Windenergieanlagen oder Windparks in ein elektrisches Versorgungsnetz ist bekannt. Bekannt ist inzwischen auch, mit Windenergieanlagen oder Windparks sogenannte Systemdienstleistungen anzubieten, die helfen, das elektrische Versorgungsnetz elektrisch zu stützen und/oder zu verbessern.

Besonders problematisch ist es, wenn zum Stützen des elektrischen Versorgungsnetzes die einzuspeisende Leistung erhöht werden soll, weil Windenergieanlagen regelmäßig so viel Leistung einspeisen, wie sie aktuell dem Wind entnehmen können. Dazu wurde zur Verbesserung bereits für kurzfristige Leistungserhöhungen vorgeschlagen, Leistung aus der Schwungmasse des sich drehenden Rotors zu verwenden. Wird aber mit erhöhter Leistung eingespeist und dazu Leistung aus dem drehenden Rotor verwendet, verlangsamt sich dieser, sodass die entsprechend erhöht eingespeiste Leistung nur für einen kurzen Zeitraum eingespeist werden kann.

Außerdem stützen sich auch heute noch viele Netzbetreiber auf die netzstützenden Eigenschaften großer angeschlossener Synchronmaschinen, die besonders als Generatoren herkömmlicher Kraftwerke arbeiten, besonders von Kernkraftwerken, Kohlekraftwerken und Gaskraftwerken. Eine solche Stützung scheint nach wie vor von manchen Netzbetreibern gewünscht zu werden. Gleichwohl ändert sich zumindest in manchen Ländern die Netzwerktopographie, sodass solche Netzstützungen durch das physikalische Verhalten der genannten, direkt mit dem Netz gekoppelten, Synchrongeneratoren auch nachteilig sein kann, besonders möglicherweise nicht für jede Situation ideal ist. Es können bspw. Instabilitäten durch subsynchrone Resonanzen auftreten.

Das Deutsche Patent- und Markenamt hat in der Prioritätsanmeldung zur vorliegenden Anmeldung folgenden Stand der Technik recherchiert: DE 10 2009 014 012 A1, DE 10 2014 209 541 A1, US 2015/0159627 A1, EP 1 665 494 B1, EP 2 282 053 A1 und WO 2012/171532 A2.

Darüber hinaus sind aus der DE 10 2013 222 452 A1, der EP 2 921 698 A1, der EP 2 999 076 A1 und der US 2015/0159627 A1 Verfahren zum Steuern einer Windenergieanlage bekannt.

Der vorliegenden Erfindung liegt somit die Aufgabe zugrunde, zumindest eins der oben genannten Probleme zu adressieren. Insbesondere soll für eine Windenergieanlage bzw. einen Windpark eine Lösung vorgeschlagen werden, mit der eine gegenüber bekannten Verfahren möglichst verbesserte Netzstützung bzw. Systemdienstleistung zum Stützen eines elektrischen Versorgungsnetzes vorgeschlagen wird. Besonders soll eine Lösung geschaffen werden, die veränderte Situationen, besonders veränderte Situationen in der Struktur oder Topologie eines elektrischen Versorgungsnetzes, bei der Netzstützung berücksichtigen kann. Zumindest soll gegenüber bisher Bekanntem eine alternative Lösung vorgeschlagen werden.

Erfindungsgemäß wird ein Verfahren nach Anspruch 1, eine Windenergieanlage nach Anspruch 13, und einen Windpark nach Anspruch 18 vorgeschlagen. Es wird ein Verfahren zum Einspeisen elektrischer Leistung in ein elektrisches Versorgungsnetz mittels wenigstens einer Windenergieanlage vorgeschlagen und die Einspeisung erfolgt an einem Netzanschlusspunkt des elektrischen Versorgungsnetzes. In das elektrische Versorgungsnetz speisen mehrere Energieerzeuger Leistung ein und mehrere Verbraucher entnehmen Leistung aus dem elektrischen Versorgungsnetz, sodass sich im elektrischen Versorgungsnetz eine Leistungsbilanz zwischen der eingespeisten und der entnommenen Leistung ergibt. Im Idealfall ist diese Leistungsbilanz 0, wenn nämlich gleichviel Leistung eingespeist wie entnommen wird. Die Leistungsbilanz wird hier als positiv angenommen, wenn mehr Leistung eingespeist als entnommen wird. Unter einer positiven Leistungsbilanz wird somit eine Situation verstanden, bei der ein Leistungsüberschuss im elektrischen Versorgungsnetz herrscht.

Es wird hierfür vorgeschlagen, einen für die Leistungsbilanz im elektrischen Versorgungsnetz repräsentativen Leistungsindikator zu überwachen. Der Leistungsindikator kann im einfachsten Fall die Netzfrequenz oder das Verhalten der Netzfrequenz, besonders ihre Änderung, sein. Es kommen aber auch andere Größen in Betracht, wie beispielsweise die Netzspannung oder ihr Verhalten. Gemäß einer Ausführungsform wird die Leistungsbilanz gemessen und der Leistungsindikator kann dann direkt der Leistungsbilanz entsprechen oder als entsprechend normierter Wert vorgesehen sein. Eine Messung kann bspw. in kleinen Netzen durch die Messung aller eingespeister Leistung und aller entnommener Leistung erfolgen, oder durch Messung von Leistungsflüssen.

Abhängig dieses Leistungsindikators wird dann eine Ausgleichsenergiemenge bestimmt. Die Windenergieanlage speist in Abhängigkeit der verfügbaren Windleistung eine elektrische Grundleistung ein. Wenn Nennwind vorherrscht, kann diese Grundleistung beispielsweise die Nennleistung der Windenergieanlage sein.

Es wird nun vorgeschlagen, dass die Einspeisung der elektrischen Grundleistung um die bestimmte Ausgleichsenergiemenge verändert wird. Wurde also eine positive Ausgleichsenergiemenge in Abhängigkeit des Leistungsindikators bestimmt, besonders dann, wenn ein Leistungsbedarf im elektrischen Versorgungsnetz erkannt wurde, wird die Einspeisung um diese bestimmte, nämlich positive, Ausgleichsenergiemenge erhöht. Besonders dann, wenn ein Leistungsüberschuss im Netz erkannt wurde, kann sich regelmäßig ein negativer Wert für die Ausgleichsenergiemenge ergeben, sodass das Verändern der Einspeisung der elektrischen Grundleistung um die bestimmte Ausgleichsenergiemenge bedeutet, dass das Einspeisen der elektrischen Grundleistung verringert wird.

Zum Bestimmen einer Ausgleichsenergiemenge in Abhängigkeit des Leistungsindikators kann beispielsweise der erfasste Leistungsüberschuss im elektrischen Versorgungsnetz auf die Energieerzeuger dieses elektrischen Versorgungsnetzes nach ihrer Größe aufgeteilt werden und das Ergebnis mit einem Bezugszeitintervall multipliziert werden. Ist, um ein einfaches Anschauungsbeispiel zu verwenden, ein Leistungsüberschuss von 100 MW erfasst worden und ist bekannt, dass ein betrachteter Windpark etwa 1% der Leistung aller an dieses elektrische Versorgungsnetz angeschlossener Einspeiser bereitstellt, so könnten diese 100 MW entsprechend so aufgeteilt werden, dass dieser Windpark 1 MW zugeordnet bekommt. Es können natürlich auch andere Werte und Aufteilungen verwendet werden, bei denen beispielsweise nur die Einspeiser berücksichtigt werden, die eine Systemdienstleistung liefern können. Auch eine Gewichtung kommt in Betracht. Ist nun, um zu diesem Beispiel zurück zu kommen, das Bezugszeitintervall eine Sekunde, so könnte als Ausgleichsenergiemenge eine Energiemenge von 1 MWs, also etwa 0,28 kWh, berechnet werden.

Es kommt aber auch in Betracht, vorab eine entsprechende Tabelle aufzustellen, in der beispielsweise vorbestimmten Änderungen der Netzfrequenz oder vorbestimmten Differenzen der Netzfrequenz zur Nennfrequenz des Netzes Ausgleichsenergiemengen zugeordnet sind. Diese können dann in Abhängigkeit von erfassten Frequenzänderungen oder erfassten Frequenzabweichungen verwendet werden. Zwischen solchen Einträgen kann interpoliert werden.

Diese Ausgleichsenergiemenge kann entsprechend zusätzlich eingespeist werden, wobei hier auch negative Werte in Betracht kommen, und es kann zum Ende des Bezugszeitintervalls eine erneute Berechnung und entsprechend angepasste Einspeisung vorgenommen werden.

Vorzugsweise wird die elektrische Grundleistung abhängig von einer erfassten oder regelungstechnisch beobachteten Windleistung bestimmt. Es kommt auch in Betracht, die elektrische Grundleistung in Abhängigkeit eines zuvor bestimmten Wertes der elektrischen Grundleistung und unter weiterer Berücksichtigung der zuvor bestimmten und zusätzlich eingespeisten Ausgleichsenergiemenge zu bestimmen. Durch das Bestimmen und entsprechende zusätzliche Einspeisen einer Ausgleichsenergiemenge kann das Verhalten dieser Art der Einspeisung bzw. Stützung, also das Verhalten der entsprechenden Windenergieanlage, ggf. des entsprechenden Windparks, dem Verhalten eines direkt mit dem elektrischen Versorgungsnetz gekoppelten Synchrongenerators angenähert werden. Auch ein direkt mit dem Netz gekoppelter Synchrongenerator speist physikalisch bei einer negativen Leistungsbilanz und somit bei einer Veränderung der Netzfrequenz zusätzliche Energie ein, die aus seiner Rotationsenergie stammt. Dieser Synchrongenerator wird dadurch langsamer. Entsprechend wird tatsächlich nur eine bestimmte Energiemenge zusätzlich eingespeist und eine solche Energiemenge ist auch nicht in beliebiger Menge verfügbar.

Vorzugsweise kann auch für das vorgeschlagene Einspeisen mittels einer Windenergieanlage oder eines Windparks eine Energiereserve vorbestimmt werden und abhängig dieser vorbestimmten Energiereserve die Ausgleichsenergiemenge bestimmt werden. Besonders beim Bestimmen einer positiven Ausgleichsenergiemenge kann diese von der vorbestimmten Energiereserve und davon abhängen, wie viel zusätzliche Ausgleichsenergiemenge kürzlich eingespeist wurde.

Vorzugsweise wird für die Windenergieanlage bzw. für den Windpark eine Energiereserve bestimmt, die eine Energiemenge angibt, die zusätzlich zur elektrischen Grundleistung ins elektrische Versorgungsnetz eingespeist werden kann. In Abhängigkeit dieser Energiereserve wird dann die Ausgleichsenergiemenge bestimmt. Die Ausgleichsenergiemenge wird also wenigstens in Abhängigkeit des Leistungsindikators und in Abhängigkeit der Energiereserve bestimmt. Beispielsweise kann die Ausgleichsenergiemenge über eine Abhängigkeitsfunktion des Leistungsindikators bestimmt werden und zusätzlich ein Gewichtungsfaktor die Energiereserve berücksichtigen. Beispielsweise kann ein Verhältnis gebildet werden zwischen vorhandener Energiereserve und maximaler Energiereserve. Dieser Faktor liegt dann naturgemäß zwischen den Werten 1 und 0 und kann somit in der Bestimmung der Ausgleichsenergiemenge in Abhängigkeit des Leistungsindikators als Faktor einfließen, der einen Wert von 0 bis 1 annehmen kann. Wird eine Ausgleichsenergiemenge zusätzlich zur Grundleistung eingespeist, führt das zu einer Verringerung der Energiereserve und kann somit auch zu einer unmittelbaren Veränderung dieses Gewichtungsfaktors führen, um nur eine bevorzugte Ausführungsform der Umsetzung zu nennen. Eine andere bevorzugte Variante wäre, dass die Ausgleichsenergiemenge zunächst in Abhängigkeit des Leistungsindikators bestimmt wird und die Energiereserve zu einer Reduzierung des dabei bestimmten Wertes führt, sobald die Energiereserve einen vorbestimmten Wert unterschreitet, wie beispielsweise 50% der maximalen Energiereserve.

Im Übrigen kann als eine solche Maximalenergiereserve ein Wert verwendet werden, der sich durch die grundsätzlichen Eigenschaften der Windenergieanlage bzw. des Windparks ergibt. Als Maximalenergiereserve oder alternativ als Anfangsenergiereserve kann auch ein Wert verwendet werden, der angibt, wie viel Energiereserve in dem Moment vorhanden ist, in dem eine erste Maßnahme zum Stützen des Netzes eingeleitet wird, die eine positive Ausgleichsenergiemenge benötigt. Erläuterungen, die Bezug auf eine maximale Energiereserve nehmen, gelten sinngemäß auch für die hier erläuterte Anfangsenergiereserve.

Gemäß einer Ausführungsform wird vorgeschlagen, dass die Bestimmung der Ausgleichsenergiemenge für ein Bezugszeitintervall erfolgt und in diesem Bezugszeitintervall die Einspeisung der Grundleistung um diese Ausgleichsenergiemenge verändert wird, also je nach Vorzeichen erhöht bzw. verringert wird. Ein solches Bezugszeitintervall kann beispielsweise eine Sekunde betragen, oder eine halbe Sekunde oder 200 ms, um nur einige bevorzugte Beispiele zu nennen. Es wird somit eine Ausgleichsenergiemenge berechnet und in dieses Bezugszeitintervall eingespeist bzw. sobald wie möglich in einem Zeitintervall eingespeist, das so groß ist wie das Bezugszeitintervall.

Dadurch kann erreicht werden, dass eine jeweils bestimmte Ausgleichsenergiemenge gezielt für einen kurzen Zeitraum eingespeist, also zusätzlich eingespeist, werden kann. Dadurch kann besonders auch für einen kurzen Zeitraum diese Energie zur Unterstützung eingespeist werden. Außerdem kann im Anschluss, also für das nächste Bezugszeitintervall, eine Ausgleichsenergiemenge erneut bestimmt und eingespeist werden. Dadurch kann auch das Verhalten dieser Windenergieanlage bzw. des Windparks an das eines direkt mit dem Netz gekoppelten Synchrongenerators angenähert werden. Besonders wird hier jeweils eine von der Situation des elektrischen Versorgungsnetzes abhängige Energiemenge eingespeist und zum Anderen erfolgt ständig, nämlich zu jedem Bezugszeitintervall, eine Neuberücksichtigung dieser Situation im elektrischen Versorgungsnetz. Auch wird bereits bei der Bestimmung der Ausgleichsenergiemenge die noch zum Stützen vorhandene Energiereserve berücksichtigt bzw. kann berücksichtigt werden.

Vorzugsweise wird vorgeschlagen, asymmetrische und/oder unterschiedlich lange Zeiträume für Bezugsintervall und Einspeiseintervall vorzusehen. Z.B. wird vorgeschlagen, alle Sekunde eine Ausgleichsenergiemenge zu berechnen, diese aber immer für größere Zeiträume, z.B. 3 s einzuspeisen. Die längere Zeit kann die Zeit bis zur Reaktion der Regelleistung sein oder sich daran orientieren. Hierdurch würden Energiepakete berechnet und eingespeist werden und diese Energiepakete würden sich addieren, u.U. sogar überlagern.

Gemäß einer weiteren Ausführungsform wird vorgeschlagen, dass die Ausgleichsenergiemenge so in Abhängigkeit des Leistungsindikators bestimmt wird, dass sie positiv ist, die Einspeisung der Grundleistung sich also erhöht, wenn sich die Leistungsbilanz verringert und negativ ist. Es wird also vorgeschlagen, dass bei der Bestimmung der Ausgleichsenergiemenge der absolute Wert der Leistungsbilanz im elektrischen Versorgungsnetz betrachtet wird und außerdem betrachtet wird, wie sich dieser entwickelt. Verringert sich die Leistungsbilanz und ist sie negativ, erhöht sie sich also dem Betrage nach, wird eine positive Ausgleichsmenge bestimmt, natürlich unter der Annahme, dass überhaupt noch eine Energiereserve, die auch synonym als Reserveenergie bezeichnet werden kann, dafür vorhanden ist. Vorzugsweise wird ein vorbestimmter unterer Grenzwert angenommen, der erst unterschritten werden muss, damit eine solche Ausgleichsenergiemenge bestimmt wird. Bei minimalen Abweichungen der Leistungsbilanz von dem Idealwert 0 wird somit gemäß einer Ausführungsform zunächst noch keine Ausgleichsenergiemenge bestimmt. Gemäß einer Ausführungsform kann die Reaktion bei einem Leistungsindikator bzw. einer Leistungsbilanz nahe 0 überproportional kleiner ausfallen. Dadurch kann erreicht werden, dass bei geringen Abweichungen faktisch oder fast keine zusätzliche Einspeisung erfolgt. Das Verhältnis zwischen Ausgleichsenergiemenge und Leistungsindikator kann vorzugsweise über ein PT2-Verhalten festgelegt werden bzw. als ein einer Sprungantwort eines PT2-Gliedes entsprechendes Verhalten beschrieben werden.

Sinngemäß wird ein Vorschlag zur Berechnung einer negativen Ausgleichsenergiemenge vorgeschlagen, nämlich derart, dass die Ausgleichsenergiemenge so in Abhängigkeit des Leistungsindikators bestimmt wird, dass sie negativ ist, die Einspeisung der Grundleistung sich also verringert, wenn sich die Leistungsbilanz erhöht und positiv ist. Auch hier wird gemäß eine Ausführungsform vorgeschlagen, dass diese Berechnung erst stattfindet, wenn die Leistungsbilanz einen vorbestimmten oberen Grenzwert überschritten hat. Das Verringern der Einspeisung der Grundleistung kann hier, und auch generell für jede hier beschriebene Situation, auch den Fall beinhalten, dass die Windenergieanlage bzw. der Windpark eine Ausgleichsenergiemenge oder einen Teil davon aus dem elektrischen Versorgungsnetz aufnimmt. Eine solche aufgenommene Energiemenge kann in der Windenergieanlage oder dem Windpark eingespeichert oder über sogenannte Chopperwiderstände vernichtet werden, oder kann auch über die Leistungsregelung abgeregelte Einspeiseleistung sein.

Gemäß einer Ausgestaltung wird vorgeschlagen, dass die Ausgleichsenergiemenge mit einer Abhängigkeitsfunktion von dem Leistungsindikator abhängt und dass die Abhängigkeitsfunktion veränderbar ist. Durch das Einspeisen einer Ausgleichsenergiemenge in das elektrische Versorgungsnetz in Abhängigkeit eines Leistungsindikators und damit in Abhängigkeit der Leistungsbilanz im elektrischen Versorgungsnetz kann angelehnt an das Verhalten eines direkt mit dem elektrischen Versorgungsnetz gekoppelten Synchrongenerators eine Netzstützung vornehmen. Durch die Verwendung einer Abhängigkeitsfunktion, die veränderbar ist, kann aber eine höhere Flexibilität erreicht werden. Besonders kann sich ein solches Verfahren auf einfache und schnelle Art und Weise an veränderte Gegebenheiten im elektrischen Versorgungsnetz anpassen. Auch können hierdurch Vorgaben eines Netzbetreibers berücksichtigt werden.

Außerdem oder alternativ wird vorgeschlagen, dass die Abhängigkeitsfunktion von dem Netzanschlusspunkt abhängt. Dies kann die technische Ausgestaltung dieses Netzanschlusspunkts betreffen, besonders seine Kapazitäten und Fähigkeiten zusätzliche Energieeinspeisung zu ermöglichen. Besonders kann hierdurch aber auch die Position des Netzanschlusspunktes in dem elektrischen Versorgungsnetz, besonders bezogen auf die Topologie des elektrischen Versorgungsnetzes, berücksichtigt werden. Beispielsweise kann hier berücksichtigt werden, ob ein Netzanschlusspunkt besonders zentral oder dezentral in dem elektrischen Versorgungsnetz angeordnet ist. Auch können Erfahrungswerte oder durchgeführte Messungen oder andere Untersuchungen des elektrischen Versorgungsnetzes Aufschluss über das Verhalten des elektrischen Versorgungsnetzes geben. Beispielsweise können hierbei Schwingverhalten des elektrischen Versorgungsnetzes herausgefunden werden. Unter Berücksichtigung solcher Schwingverhalten kann es für unterschiedliche Positionen von Netzanschlusspunkten in einem solchen elektrischen Versorgungsnetz vorteilhaft sein, unterschiedliche Abhängigkeitsfunktionen vorzusehen. Besonders kann über eine Abhängigkeitsfunktion festgelegt werden bzw. beeinflusst werden, ob eine besonders große Ausgleichsenergiemenge oder eher eine kleine Ausgleichsenergiemenge in Abhängigkeit der Leistungsbilanz bestimmt wird. So kann für einen gleichen Wert einer Leistungsbilanz je nach Wahl oder Einstellung der Abhängigkeitsfunktion eine größere oder kleinere Ausgleichsenergiemenge vorgesehen sein.

Eine Eigenschaft des Netzanschlusspunktes ist auch sein Kurzschlussstromverhältnis. Insbesondere wird vorgeschlagen, dass die Abhängigkeitsfunktion so ausgewählt oder eingestellt wird, dass eine umso größere Ausgleichsenergiemenge bestimmt wird, umso größer das Kurzschlussstromverhältnis an dem Netzanschlusspunkt ist. Dieses Kurzschlussstromverhältnis ist das Verhältnis der Kurzschlussleistung zur Anschlussleistung. Hierbei wird unter Kurzschlussleistung diejenige Leistung verstanden, die das betreffende Versorgungsnetz an den betrachteten Netzanschlusspunkt, an dem die Windenergieanlage bzw. der Windpark angeschlossen werden soll, bereitstellen kann, wenn dort ein Kurzschluss auftritt. Die Anschlussleistung ist die Anschlussleistung der anzuschließenden Windenergieanlage bzw. des anzuschließenden Windparks, insbesondere also die Nennleistung des anzuschließenden Generators bzw. der anzuschließenden Generatoren.

Vorzugsweise ist eine solche Abhängigkeitsfunktion nichtlinear, sodass eine Proportionalität zwischen der Leistungsbilanz und der Ausgleichsenergiemenge vermieden werden kann. Bei geeigneter Wahl der nichtlinearen Abhängigkeitsfunktion kann dies Schwingungen im elektrischen Versorgungsnetz entgegenwirken. Beispielsweise kann eine solche nicht lineare Abhängigkeitsfunktion so gewählt werden, dass die Ausgleichsenergiemenge immer langsamer steigt, je größer die Leistungsbilanz ist. Dadurch kann vermieden werden, dass im Fall einer auftretenden Schwingung mit immer größeren Leistungsenergiemengen gegengesteuert wird, was tatsächlich zu einer Anregung der Schwingung führen könnte.

Vorzugsweise wird alternativ oder ergänzend vorgeschlagen, dass die Abhängigkeitsfunktion so ausgebildet ist, dass sie sich zum Bestimmen positiver Ausgleichsenergiemengen anders verhält bzw. mit einem anderen Zusammenhang vorgesehen ist, als wenn sie zur Bestimmung von negativen Ausgleichsenergiemengen führt. Auch dies kann einem etwaigen Auftreten einer Schwingung im elektrischen Versorgungsnetz entgegenwirken, bzw. dem unterschiedlichen Verhalten von Energieversorgungsnetzen bei Über-und Unterspeisung Rechnung tragen.

Die Abhängigkeitsfunktion kann im Übrigen auch von dem Netzanschlusspunkt abhängen und außerdem veränderbar sein. Beispielsweise kann eine von dem Netzanschlusspunkt abhängige Grundfunktion der Abhängigkeitsfunktion vorgesehen sein und zusätzlich ein Gewichtungsfaktor, um die Abhängigkeitsfunktion zu verändern.

Die Abhängigkeitsfunktion kann von einer Systemeigenschaft des elektrischen Versorgungsnetzes abhängen. Dazu gehört beispielsweise, welche Gesamtleistung durch die verbundenen Energieerzeuger, die auch synonym als Einspeiser oder Erzeuger bezeichnet werden können, eingespeist werden kann. Darunter kann auch fallen, nur Energieerzeuger innerhalb eines definierten Umkreises von beispielsweise einigen hundert Kilometern, insbesondere 200 km oder 500 km, zu berücksichtigen. Darunter kann auch die Art der vorhandenen Energieerzeuger und außerdem oder alternativ die Art der vorhandenen Verbraucher berücksichtigt werden. Dazu kann ein Durchschnittswert gebildet werden, beispielsweise über den induktiven Anteil aller Verbraucher an der Gesamtimpedanz aller Verbraucher. Es kann auch vorgesehen sein, nur dominante Verbraucher zu betrachten, also beispielsweise Verbraucher, die wenigstens einen Mindestanteil der verbrauchten Leistung aller Verbraucher abnehmen, wie beispielsweise 5% oder 10%.

Ähnliches gilt auch für die Berücksichtigung der Einspeiser, für die auch vorgesehen sein kann, nur die dominantesten zu betrachten. Für eine Berücksichtigung der Einspeiser kann auch vorgesehen sein, eine Charakteristik zu erstellen und davon abhängig, beispielsweise über eine vorbestimmte Tabelle, die Abhängigkeitsfunktion auszuwählen. Eine solche Charakteristik kann beinhalten, ob das Netz eher dezentrale Einspeiser bzw. Erzeuger, wie Windenergieanlagen oder Photovoltaikanlagen, aufweist oder mehr herkömmliche Kraftwerke wie Kohlekraftwerke oder Kernkraftwerke beinhaltet. Es kann auch berücksichtigt werden, wie viel Systemdienstleistung die angeschlossenen Erzeuger bereitstellen können. Dafür wird vorgeschlagen, dass jeder angeschlossene Erzeuger bzw. Einspeiser einen Leistungswert oder einen Energiewert angibt, den er innerhalb eines vorbestimmten Stützintervalls, das beispielsweise 5 s oder 10 s betragen kann, bereitstellen kann. Eine solche Angabe kann auch während des Betriebs veränderlich sein.

Gemäß einer Ausführungsform werden als Systemeigenschaft eine Verschaltungssituation bzw. Schalterstellungen im elektrischen Versorgungsnetz berücksichtigt. Besonders der Betreiber des elektrischen Versorgungsnetzes kann über entsprechende Schalterstellungen die Netztopologie beeinflussen. So kann bspw. durch entsprechende Schalterstellungen eine Stichleitung in eine Masche geändert werden, oder eine Ringtopologie geschaltet oder aufgelöst werden. Auch das Abtrennen oder Hinzuschalten einer parallelen Leitung kommt in Betracht. Bspw. kann, um ein konkretes Beispiel zu nennen, das Trennen einer Hochspannungsleitung über einen Fluss, damit ausnahmsweise ein sehr großes Schiff passieren kann, zu einer solchen Veränderung der Netztopologie führen. Um solche Fälle besser zu berücksichtigen, wird gemäß einer Ausführungsform somit vorgeschlagen, die Abhängigkeitsfunktion in Abhängigkeit einer Verschaltungssituation bzw. Schalterstellungen im elektrischen Versorgungsnetz zu verändern, einzustellen oder auszuwählen. Die Verschaltungssituation bzw. Schalterstellungen im elektrischen Versorgungsnetz kann dabei gemessen werden, oder sie wird vom Netzbetreiber mitgeteilt.

Davon abhängig kann die Abhängigkeitsfunktion eingestellt oder ausgewählt werden. Verändern sich diese Werte, was oben angedeutet wurde, so kann die Abhängigkeitsfunktion auch entsprechend verändert werden.

Außerdem oder alternativ kann all dies in Abhängigkeit eines Systemverhaltens des elektrischen Versorgungsnetzes erfolgen. Ein solches Systemverhalten ist besonders die Neigung des elektrischen Versorgungsnetzes bei Schwankungen der Leistungsbilanz zu schwingen. Das Systemverhalten kann dabei mit oben genannten Systemeigenschaften zusammenhängen.

Außerdem oder alternativ kann die Abhängigkeitsfunktion in Abhängigkeit wenigstens eines Systemzustandes des elektrischen Versorgungsnetzes verändert, eingestellt oder ausgewählt werden. Ein Systemzustand ist ein Ist-Zustand des Versorgungsnetzes und betrifft besonders die Frequenz im elektrischen Versorgungsnetz als auch die Spannung im elektrischen Versorgungsnetz. Es können aber auch andere Systemzustände, wie das Vorhandensein bzw. die Größe von Oberwellen der elektrischen Spannung oder auch elektrische Ströme in Betracht kommen. Der Begriff Systemzustand ist hier regelungstechnisch zu verstehen. Er betrifft insbesondere keine körperlichen Eigenschaften oder andere Eigenschaften des elektrischen Versorgungsnetzes, wie beispielsweise die Größe eines Transformators, einer Leitung oder die Impedanz des Netzes oder eines Netzabschnitts.

Außerdem oder alternativ wird vorgeschlagen, dass die Abhängigkeitsfunktion in Abhängigkeit wenigstens einer weiteren Abhängigkeitsfunktion einer weiteren Windenergieanlage oder eines weiteren Windparks verändert, eingestellt oder ausgewählt wird. Besonders wird hier vorgeschlagen, dass diese Windenergieanlage bzw. der Windpark mit der weiteren Windenergieanlage bzw. dem weiteren Windpark kommuniziert und zumindest diese Informationen austauscht, vorzugsweise aber diversere weitere Informationen, austauscht. Auch hier kann beispielsweise vorgesehen sein, dass für ein Beispiel zweier identischer Windparks vorgesehen wird, dass diese unterschiedlichen Abhängigkeitsfunktionen wählen, besonders so, dass der eine Windpark eine größere Ausgleichsenergiemengen bei gleichem Leistungsindikator bestimmt als der andere Windpark. Auch dies kann einem Aufschwingen entgegenwirken und vermeidet besonders, dass diese beiden Windparks gegeneinander Netzstützungen vorsehen.

Außerdem oder alternativ wird vorgeschlagen, dass eine externe Vorgabe berücksichtigt wird, besonders eine externe Vorgabe des Betreibers des elektrischen Versorgungsnetzes. Hierdurch kann dem Betreiber des elektrischen Versorgungsnetzes, der vereinfachend auch als Netzbetreiber bezeichnet wird, eine Möglichkeit an die Hand gegeben werden, die jeweiligen Windenergieanlagen oder Windparks hinsichtlich ihrer Systemdienstleistungen, insbesondere hinsichtlich ihrer Netzstützungseigenschaft, zu steuern. Er kann diese Verhaltensweisen verändern, einstellen oder aus verschiedenen Möglichkeiten auswählen. Dies kann auch beispielsweise abhängig von gemachten Erfahrungen angepasst werden.

Gemäß einer weiteren Ausführungsform wird vorgeschlagen, dass die Abhängigkeitsfunktion abhängig ist von einem Ereignis im elektrischen Versorgungsnetz, insbesondere abhängig ist von einer Abtrennung oder Wiederverbindung eines Netzabschnitts. Wird ein Teil des elektrischen Versorgungsnetzes beispielsweise als zwangsweise Schutzfunktion oder Schutzreaktion abgetrennt, kann das dazu führen, dass sich auch plötzlich die Leistungsbilanz ändert, sowohl in dem abgetrennten Teil als auch in dem anderen Teil. Wird beispielsweise ein Netzabschnitt abgetrennt, an dem überdurchschnittlich viel Leistung verbraucht wird, in dem möglicherweise nur Verbraucher angeschlossen sind, so führt eine Abtrennung regelmäßig dazu, dass in dem verbleibenden elektrischen Versorgungsnetz plötzlich eine positive Leistungsbilanz herrscht, also ein plötzlicher Bedarf besteht, einem Leistungsüberschuss entgegen zu wirken. Dabei kann es besonders vorteilhaft sein, diesen Leistungsüberschuss am Stärksten in der Nähe des Punktes entgegenzuwirken, an dem besagtes Teilnetz abgetrennt wurde. Ist zumindest kurzfristig abzusehen, dass eine solche Abtrennung bevorsteht, kann entsprechend die Abhängigkeitsfunktion eines Windparks in der Nähe eines solchen Trennpunktes zu einer besonders starken Abhängigkeit hin verändert werden.

Gleiches kann gelten, wenn Teilnetze wieder verbunden werden sollen. Von diesem Trennpunkt weiter entfernte Windparks können eine schwächere Abhängigkeitsfunktion wählen, um auch in dieser Situation einer Instabilitätsneigung des Netzes entgegen zu wirken.

Vorzugsweise wird der Leistungsindikator bestimmt aus der Netzfrequenz, einer zeitlichen Ableitung der Netzfrequenz, einer Netzspannung, einer gemessenen Leistungsdifferenz, einer der Netzfrequenz nachgebildeten Modellfrequenz und/oder einem Phasenwinkel zwischen einer Phase der Netzspannung und der Modellfrequenz. Es können auch mehrere Größen kombiniert werden, um den Leistungsindikator zu bestimmen.

Gemäß einer Ausführungsform wird vorgeschlagen, dass der Leistungsfaktor außerdem in Abhängigkeit der Netzimpedanz bestimmt wird. Besonders wird wenigstens eine der vorgenannten Größen, insbesondere Netzfrequenz und/oder ihre zeitliche Ableitung, zum Bestimmen des Leistungsfaktors verwendet und zusätzlich die Netzimpedanz berücksichtigt. Als Netzimpedanz kann ein an einem Netzanschlusspunkt gemessener Wert verwendet werden. Es kommt auch in Betracht, dass die Netzimpedanz als Wert bekannt ist und bspw. vom Netzbetreiber bereitgestellt wird.

Vorzugsweise wird die Netzfrequenz oder dessen zeitliche Ableitung des elektrischen Versorgungsnetzes, oder eine Kombination aus beidem als Leistungsindikator verwendet. Dies setzt natürlich voraus, dass das elektrische Versorgungsnetz eine Wechselspannung aufweist bzw. ein Wechselspannungsnetz ist. Abhängig von dieser Netzfrequenz als Leistungsindikator wird dann jeweils eine Ausgleichsenergiemenge bestimmt und hierbei kann beispielsweise die Ausgleichsenergiemenge umso größer bestimmt werden, je größer eine Unterschreitung der Netzfrequenz, also der aktuellen Frequenz, gegenüber der Nennfrequenz oder einem unteren Grenzwert eines Toleranzbandes um die Netzfrequenz ist. Aber auch andere Berücksichtigungen der Netzfrequenz als Leistungsindikator können sinnvoll sein, wie die Berücksichtigung einer Änderung der Netzfrequenz. Der Leistungsindikator kann dann trotzdem der Netzfrequenz entsprechen oder von ihr abgeleitet sein. Entspricht er der Netzfrequenz, können für das Bestimmen der Ausgleichsenergiemenge Änderungen des Leistungsindikators und damit Änderungen der Netzfrequenz berücksichtigt werden. Das gleiche kann erreicht werden, wenn der Leistungsindikator bereits der Änderung der Netzfrequenz entspricht.

Besonders bei kleinen Netzen kommt in Betracht, die Leistungsdifferenz zu messen und direkt als Leistungsindikator zu verwenden. Hierdurch kann die Leistungsbilanz direkt erfasst und berücksichtigt werden, was vorteilhaft ist, allerdings für besonders große Netze oder besonders komplexe Netze aufwändig sein kann.

Statt die Netzfrequenz direkt zu messen, kann eine der Netzfrequenz nachgebildete Modellfrequenz berücksichtigt werden. Eine solche Modellfrequenz kann bspw. durch einen Zustandsbeobachter ermittelt werden.

Außerdem oder alternativ wird vorgeschlagen, einen Phasenwinkel zwischen einer Phase bzw. Phasenlage der Netzspannung und einer Phase bzw. Phasenlage der Modellfrequenz zu berücksichtigen. Hierdurch kann besonders gut eine Veränderung der Netzfrequenz berücksichtigt werden, die zu einer Vergrößerung des Phasenwinkels führt.

Gemäß einer Ausführungsform wird vorgeschlagen, dass sich die Ausgleichsenergiemenge berechnet aus einem Produkt aus der Änderung des Leistungsindikators und einem einstellbaren ersten Ortsfaktor. Im einfachsten Fall entspricht die Ausgleichsenergiemenge diesem Produkt. Es können aber weitere Einflussgrößen berücksichtigt werden, wie beispielsweise eine insgesamt zur Verfügung stehende Energiemenge. Jedenfalls wird vorgeschlagen, zur Berechnung, also zur Bestimmung der Ausgleichsenergiemenge, die Änderung des Leistungsindikators mit dem ersten Ortsfaktor zu multiplizieren. Dadurch kann die Ausgleichsenergiemenge in Abhängigkeit der Änderung des Leistungsindikators, also beispielsweise eine Frequenzänderung, berechnet werden.

Über diesen ersten Ortsfaktor kann eine ortsabhängige Berücksichtigung des betreffenden Netzanschlusspunktes einfließen. So kann beispielsweise für eine erste Windenergieanlage oder einen ersten Windpark, die über einen ersten Netzanschlusspunkt in das elektrische Versorgungsnetz einspeisen, als erster Ortsfaktor, der Wert 1, eingesetzt werden. Bei einer anderen Windenergieanlage oder anderem Windpark, die ansonsten dieselben Voraussetzungen wie die erste Windenergieanlage beziehungsweise der erste Windpark haben, aber über einen anderen Netzanschlusspunkt in das elektrische Versorgungsnetz einspeisen, der insbesondere an einem anderen Ort in dem elektrischen Versorgungsnetz angeordnet ist, kann beispielsweise als erster Ortsfaktor der Wert 0,5 verwendet werden. Dadurch kann über diesen Ortsfaktor eine Gewichtung vorgenommen und dadurch die Bestimmung der Ausgleichsenergiemenge in Abhängigkeit des Netzanschlusspunktes beeinflusst werden. Der erste Ortsfaktor kann aber auch variabel sein, um dadurch auch andere Größen als den Ort des Netzanschlusspunktes einschließen lassen zu können, oder um dadurch dynamischer reagieren zu können.

Außerdem oder alternativ wird gemäß einer weiteren Ausführungsform vorgeschlagen, dass sich die Ausgleichsenergiemenge berechnet aus einem Produkt aus dem Leistungsindikator und einem einstellbaren zweiten Ortsfaktor. Demnach wird der Leistungsindikator zu Grunde gelegt und mit einem Ortsfaktor multipliziert. Auch hier, wie bei der Ausführungsform, bei der die Änderung des Leistungsindikators verwendet wird, können auch noch weitere Einflussgrößen einfließen. Im einfachsten Fall wird aber die Ausgleichsenergiemenge unmittelbar aus dem Produkt des Leistungsindikators und dem zweiten Ortsfaktor berechnet.

Wenn aber weitere Einflussgrößen einfließen, so kann auch eine Kombination vorgenommen werden mit der zuvor beschriebenen Ausführungsform, bei der die Ausgleichsenergiemenge unter anderem aus der Änderung des Leistungsindikators bestimmt wird. In diesem Fall können der erste und der zweite Ortsfaktor einfließen. Theoretisch könnte die Verwendung nur eines Ortsfaktors ausreichen und der erste und zweite Ortsfaktor identisch sein. Das käme grundsätzlich auch für die beiden einzelnen Varianten ohne Kombination in Betracht, also wenn nur der Leistungsindikator oder nur seine Änderung betrachtet wird. Praktischerweise kann aber der Ortsfaktor, sowohl der erste als auch der zweite Ortsfaktor, eine Normierung beinhalten. Besonders die beschriebene Änderung des Leistungsindikators betrifft eine zeitliche Änderung des Leistungsindikators, sodass sich bereits eine andere physikalische Einheit im Vergleich zu dem absoluten Wert des Leistungsindikators ergibt. Das kann über den jeweiligen Ortsfaktor berücksichtigt werden. Auch eine Größenanpassung für die beschriebenen unterschiedlichen Situationen kann über den jeweiligen Ortsfaktor mit berücksichtigt werden. Alternativ können die Frequenz und die Frequenzänderung gemeinsam in den Leistungsindikator einfließen, so dass der Leistungsindikator bereits beides beinhaltet und durch die Verwendung des Leistungsindikators Frequenz und Frequenzänderung berücksichtigt werden.

Eine weitere bevorzugte Ausführungsform ist dadurch gekennzeichnet, dass

- die Windenergieanlage bzw. der Windpark zum Einspeisen der elektrischen Leistung in das elektrische Versorgungsnetz wenigstens eine Einspeisevorrichtung aufweist und die Einspeisevorrichtung wenigstens einen Betriebsbereich aufweist, der einzuhalten ist, um einen Anlagenschutz oder vorgeschriebene Grenzwerte einzuhalten, wobei

- zum Einspeisen der Ausgleichsenergiemenge kann der Betriebsbereich für ein vorbestimmtes Ausgleichszeitintervall verlassen wird, insbesondere wenigstens ein oberer Grenzwert des Betriebsbereichs um bis zu einem vorbestimmten Überschreitungswert überschritten wird, wenn die Einspeisung der Grundleistung erhöht wird.

Die verwendete Windenergieanlage oder der verwendete Windpark weisen somit wenigstens eine Einspeisevorrichtung auf, die wiederum wenigstens einen Betriebsbereich aufweist. Besonders bei Verwendung einer Windenergieanlage kann eine einzelne Einspeisevorrichtung, besonders ein Wechselrichter einschließlich Ausgangsdrossel, vorgesehen sein. Im Fall eines Windparks können mehrere solcher Einspeisevorrichtungen verwendet werden. Es kommt aber auch in Betracht, dass der Windpark die Energie seiner Windenergieanlagen anderweitig sammelt und eine zentrale Einspeisevorrichtung verwendet, um eine weitere Variante zu erläutern.

Diese wenigstens eine Einspeisevorrichtung weist somit wenigstens einen Betriebsbereich auf, der einzuhalten ist, um einen Anlagenschutz oder vorgeschriebene Grenzwerte einzuhalten. Besonders kann der maximal einzuspeisende Strom eine Obergrenze bilden und dadurch hinsichtlich des einzuspeisenden Stroms einen Betriebsbereich definieren. Ein anderer Betriebsbereich kann durch einen zu verwendenden Spannungsbereich gegeben sein.

Es wird nun aber vorgeschlagen, dass zum Einspeisen der Ausgleichsenergie der Betriebsbereich ausnahmsweise verlassen wird. Das ist auch nur für ein vorbestimmtes Ausgleichszeitintervall vorgesehen. Dem liegt die Erkenntnis zu Grunde, dass Betriebsbereiche, besonders Spannungs-, Strom- oder Leistungsgrenzen, besonders zu einem thermischen Schaden führen können. Ein Überschreiten solcher Grenzen kann also eine Überhitzung zur Folge haben. Es wurde aber erkannt, dass hierbei auftretende Temperaturüberhöhungen, die letztlich zu einer Zerstörung oder zumindest Alterung führen, eine gewisse Zeitkonstante aufweisen und somit kurzzeitige Überhöhungen in Kauf genommen werden können. Da hier das definierte kurzzeitige Einspeisen einer vorbestimmten Ausgleichsenergiemenge vorgesehen ist, kann besonders auch über die Verwendung eines kurzen Bezugszeitintervalls trotz Überschreiten von Grenzwerten dadurch eingehalten werden, dass dies nur sehr kurzzeitig erfolgt. Besonders durch Wahl eines kurzen Bezugszeitintervalls kann trotz überhöhter Einspeisung eine Übertemperatur vermieden werden.

Vorzugsweise ist ein oberer Grenzwert des Betriebsbereichs vorgesehen, der um bis zu einem vorbestimmten Überschreitungswert überschritten werden darf, wenn die Einspeisung der Grundleistung erhöht wird. Durch Festlegung dieses vorbestimmten Überschreitungswertes, besonders im Zusammenhang mit der vorgesehenen Überschreitungszeit beziehungsweise maximalen Überschreitungszeit, können die Überschreitung und besonders auch die resultierende Auswirkung gezielt in Grenzen gehalten werden. Bspw. entspricht das Überschreiten der Nenndrehzahl dem Überschreiten einer Grenze. Damit steht im Rotor mehr Energie zur Verfügung.

Gemäß einer bevorzugten Ausgestaltung wird vorgeschlagen, dass zum Einspeisen der Ausgleichsenergiemenge Rotationsenergie der Windenergieanlage verwendet wird, wenn die Einspeisung der Grundleistung erhöht wird. Wenn also mehr Energie eingespeist werden muss, als die Windenergieanlage aktuell erzeugt, kann Rotationsenergie besonders aus dem aerodynamischen, aber auch dem elektrodynamischen Rotor der Windenergieanlage verwendet werden. Es dürfte auch dazu führen, dass die Drehzahl des Rotors dadurch abnimmt. Dies wird aber in Kauf genommen. Durch das Bestimmen der Ausgleichsenergie, die hier zusätzlich eingespeist wird, ist aber auch die Energie, die hier aus der Rotation entnommen wird, klar spezifiziert und damit kontrollierbar. Entsprechend kann das Bestimmen der Ausgleichsenergiemenge auch in Abhängigkeit der Drehzahl des Rotors der Windenergieanlage erfolgen. Dabei ist mit dem Rotor der Windenergieanlage grundsätzlich der aerodynamische Rotor gemeint und der elektrodynamische Rotor kann hier zur besseren Abgrenzung als Läufer bezeichnet werden. Die Drehzahlen von Läufer und Rotor sind aber bei einer getriebelosen Windenergieanlage gleich und im Falle einer Getriebeanlage lassen sich die beiden Drehzahlen ohne Weiteres ineinander umrechnen.

Außerdem oder alternativ wird vorgeschlagen, dass Energie als Rotationsenergie in die Windenergieanlage eingespeichert wird, wenn die Einspeisung der Grundlast verringert wird, wenn also weniger Energie eingespeist wird oder sogar aus dem elektrischen Versorgungsnetz entnommen wird. Besonders für den Fall, dass lediglich weniger Energie in das elektrische Versorgungsnetz eingespeist wird, weiterhin aber eine positive Leistung eingespeist wird, kann eine solche Verwendung des Rotors als Energiespeicher einfach dadurch realisiert werden, dass auch entsprechend weniger Energie aus dem Rotor bzw. aus der Bewegung des Rotors entnommen wird, als durch den Wind in diesen eingegeben wird. Das Einspeichern der Rotationsenergie kann dann einfach dadurch erreicht werden, dass ein Drehzahlsollwert entsprechend erhöht wird.

Vorzugsweise ist alternativ oder zusätzlich eine Leistungsabregelung der Windenergieanlage vorgesehen, wenn die Einspeisung der Grundleistung verringert wird. Es wird somit vorgeschlagen, den Betriebspunkt der Windenergieanlage so zu verändern, dass sie weniger Leistung erzeugt. Das kann bspw. durch Pitchen der Rotorblätter aus dem Wind erfolgen.

Gemäß einer bevorzugten Ausgestaltung wird vorgeschlagen, dass

- die Windenergieanlage bzw. wenigstens eine der Windenergieanlagen des Windparks einen Generator aufweist, der mit einer Generatordrehzahl betrieben wird,

- ein Erwartungswert bestimmt wird, der angibt, ob eine Veränderung der Leistungsbilanz zu erwarten ist, und

- die Drehzahl in Abhängigkeit des Erwartungswertes verändert wird, wenn dieser angibt, dass eine Veränderung der Leistungsbilanz zu erwarten ist.

Es wird somit vorgeschlagen, zu prüfen, ob eine Veränderung der Leistungsbilanz zu erwarten ist. Eine Änderung der Leistungsbilanz kann beispielsweise in Abhängigkeit einer Tageszeit aufgrund von Erfahrungswerten zu erwarten sein, wenn besonders viele oder leistungsstarke Verbraucher erfahrungsgemäß zu- oder abgeschaltet werden. Eine Leistungsbilanz kann auch dann erwartet werden, wenn dies durch einen Großverbraucher angekündigt wird. Sie kann auch dann erwartet werden, wenn aufgrund des Wechsels von Tag zu Nacht oder umgekehrt besonders der Anteil photovoltaisch erzeugter Leistung sich ändert. Vorzugsweise wird eine Wettervorhersage, besonders eine Windvorhersage, ausgewertet und daraus eine Änderung der zu erwartenden einzuspeisenden Windleistung ermittelt. Auch daraus kann ein Erwartungswert für eine Leistungsbilanz abgeleitet werden. Weitere Ereignisse können Maximalleistungsgradienten sein, die z.B. bei einer Sonnenfinsternis, großen von vielen Menschen verfolgten Sportgroßereignissen, Weihnachten und Silvester auftreten können.

Es kommt auch in Betracht, dass besonders große Verbraucher eine Nachricht an den Netzbetreiber oder eine andere Leitstelle übermitteln, mit der eine Veränderung bei diesem großen Verbraucher angekündigt wird. Auch eine geplante Abschaltung oder Wiederzuschaltung eines Teilnetzes des elektrischen Versorgungsnetzes kann eine Veränderung der Leistungsbilanz erwarten lassen. Entsprechend wird ein Erwartungswert bestimmt und es wird vorgeschlagen, dass die Drehzahl in Abhängigkeit dieses Erwartungswertes verändert wird, wenn dieser angibt, dass eine Veränderung der Leistungsbilanz zu erwarten ist. Besonders wird vorgeschlagen, dass die Drehzahl erhöht wird, wenn zu erwarten ist, dass die Leistungsbilanz negativ wird, um dadurch mehr Rotationsenergie verfügbar zu machen, auf die zur Bestimmung und dann Einspeisung der Ausgleichsenergiemenge zurückgegriffen werden kann.

Als weiterer Aspekt kommt in Betracht, die erlaubten akustischen Grenzen kurzfristig durch eine Überdrehzahl zu verlassen. Im Mittel kann die Anlage hierbei immer noch die Grenzwerte einhalten, aber zur Stützung kann kurzfristig mehr Drehzahl erlaubt werden, was zu mehr Schall führt, aber nur kurzfristig.

Erfindungsgemäß wird zudem eine Windenergieanlage zum Einspeisen elektrischer Leistung in ein elektrisches Versorgungsnetz an einem Netzanschlusspunkt vorgeschlagen und diese Windenergieanlage umfasst

- ein Überwachungsmittel zum Überwachen eines für eine Leistungsbilanz im elektrischen Versorgungsnetz repräsentativen Leistungsindikators, wobei die Leistungsbilanz eine Differenzleistung angibt als Differenz zwischen

  - in das elektrische Versorgungsnetz durch Energieerzeuger eingespeister Leistung und

  - aus dem elektrischen Versorgungsnetz durch Verbraucher entnommener Leistung, wobei die Leistungsbilanz positiv ist, wenn mehr Leistung eingespeist als entnommen wird,

- ein Bestimmungsmittel zum Bestimmen einer Ausgleichsenergiemenge in Abhängigkeit des Leistungsindikators,

- eine Einspeisevorrichtung zum Einspeisen der elektrischen Leistung in das elektrische Versorgungsnetz an dem Netzanschlusspunkt,

- eine Steuerungsvorrichtung zum Steuern der Einspeisevorrichtung so, dass

  - die Einspeisevorrichtung eine elektrische Grundleistung in Abhängigkeit verfügbarer Windleistung einspeist, und dass

  - die Einspeisevorrichtung die Einspeisung der elektrischen Grundleistung um die bestimmte Ausgleichsenergiemenge verändert.

Das Überwachungsmittel überwacht somit den Leistungsindikator, der für die Leistungsbilanz repräsentativ ist. Die Leistungsbilanz gibt eine Differenzleistung als Differenz zwischen der in das elektrische Versorgungsnetz eingespeisten Leistung und der aus dem elektrischen Versorgungsnetz entnommenen Leistung an. Sie ist auch hier so definiert, wie bereits oben im Zusammenhang mit wenigstens einer Ausführungsform des Verfahrens zum Einspeisen elektrischer Leistung erläutert wurde.

Das Bestimmungsmittel bestimmt dann in Abhängigkeit des Leistungsindikators eine Ausgleichsenergiemenge. Das Bestimmungsmittel kann beispielsweise eine Recheneinheit mit einem Mikroprozessor sein. Das Bestimmungsmittel kann auch Teil einer nachfolgend noch erläuterten Steuerungsvorrichtung zum Steuern einer Einspeisevorrichtung sein. Die Einspeisevorrichtung, die beispielsweise als Wechselrichter mit nachgeschalteter Drossel ausgebildet sein kann, wird somit zum Einspeisen der elektrischen Leistung in das elektrische Versorgungsnetz an dem Netzanschlusspunkt verwendet und durch die Steuerungsvorrichtung gesteuert. Die Steuerungsvorrichtung steuert dabei die Einspeisevorrichtung so, dass eine elektrische Grundleistung in Abhängigkeit verfügbarer Windleistung eingespeist wird und zusätzlich zu der elektrischen Grundleistung die durch das Bestimmungsmittel bestimmte Ausgleichsenergiemenge eingespeist wird. Wurde diese Ausgleichsenergiemenge mit einem negativen Wert bestimmt, so wird die Einspeisung der Grundleistung entsprechend reduziert.

Vorzugsweise ist die vorgeschlagene Windenergieanlage dadurch gekennzeichnet, dass sie wenigstens ein Verfahren gemäß einer der vorstehend beschriebenen Ausführungsformen ausführt.

Vorzugsweise weist die Windenergieanlage einen Reserveenergiespeicher auf, in dem die Energiereserve oder ein Teil davon gespeichert werden kann. So kann beispielsweise die Energiereserve zum Teil in der Rotation des aerodynamischen Rotors und/oder des Läufers der Windenergieanlage gespeichert werden und ein anderer Teil kann in diesen Reserveenergiespeicher gespeichert werden, um dadurch mehr Ausgleichsenergie bereitstellen zu können. Der Reserveenergiespeicher kann beispielsweise als Batteriespeicher oder als Schwungradspeicher vorgesehen sein, oder als Kombination aus beidem.

Vorzugsweise ist der Reserveenergiespeicher zu der Windenergieanlage als externer Energiespeicher vorgesehen. Der Energiespeicher kann beispielsweise in einem zusätzlichen Gehäuse oder Gebäude außerhalb der Windenergieanlage vorgesehen sein. Er kann aber auch in Bezug auf die Einspeisevorrichtung, also besonders einen oder mehrere Wechselrichter, extern vorgesehen sein. Er ist also nicht Teil des Wechselrichters und ist insbesondere zusätzlich zu einem Gleichspannungszwischenkreis eines Wechselrichters vorgesehen. Insbesondere weist er ein Vielfaches, beispielsweise wenigstens das Fünffache oder wenigstens das Zehnfache, der Speicherkapazität eines Gleichspannungszwischenkreises einer verwendeten Wechselrichteranordnung auf.

Gemäß einer Ausführungsform wird vorgeschlagen, dass die Windenergieanlage dadurch gekennzeichnet ist, dass

- die Steuerungsvorrichtung einen Ortsfaktorblock aufweist zum Bereitstellen eines ersten und/oder zweiten Ortsfaktors, wobei der Ortsfaktorblock einen Eingang aufweist, an dem eine den Ortsfaktor beeinflussende Größe eingegeben werden kann, und wobei

- sich die Ausgleichsenergiemenge berechnet aus einem Produkt aus der Änderung des Leistungsindikators und dem ersten Ortsfaktor oder dass außerdem oder alternativ

- sich die Ausgleichsenergiemenge berechnet aus einem Produkt aus dem Leistungsindikator und dem zweiten Ortsfaktor.

Die Steuerungsvorrichtung weist somit einen Ortsfaktorblock auf, der einen ersten oder zweiten Ortsfaktor oder beide dieser Ortsfaktoren bereitstellen kann. Dafür hat er einen Eingang, an dem jeweils wenigstens eine den Ortsfaktor beeinflussende Größe eingegeben werden kann. Im einfachsten Fall wird jeweils ein Wert eingegeben, der proportional zum Ortsfaktor ist. Grundsätzlich kann auch direkt der Ortsfaktor eingegeben werden. Vorzugsweise wird aber jeweils ein Gewichtungsfaktor eingegeben, der beispielsweise im Bereich von 0 bis 1 liegen kann, um diesen dann mit einer Funktion zu verknüpfen, im einfachsten Fall mit einem weiteren Wert zu multiplizieren, um dadurch den Ortsfaktor zu erhalten. Im geschilderten Beispiel würde die Eingabe des Gewichtungsfaktors mit der Größe 1 dazu führen, dass sich der maximale Ortsfaktor ergibt, wohingegen sich bei Eingabe beispielsweise eines Wertes von 0,5 ein Ortsfaktor mit der Hälfte der Größe des maximalen Ortsfaktors ergibt.

Dieser Ortsfaktor bzw. diese Ortsfaktoren werden dann bereitgestellt, nämlich insbesondere zur weiteren Berechnung ausgegeben. Aus ihnen kann dann die Ausgleichsenergiemenge berechnet werden, nämlich entweder aus einem Produkt aus der Änderung des Leistungsindikators und dem ersten Ortsfaktor oder außerdem oder alternativ aus dem Produkt aus dem Leistungsindikator und dem zweiten Ortsfaktor. Es kommt auch eine Kombination in Betracht. Hierüber kann somit die Ausgleichsenergiemenge bzw. ihre Berechnung beeinflusst werden. Diese Beeinflussung kann auch von extern vorgenommen werden, indem die den Ortsfaktor beeinflussende Größe am Eingang des Ortsfaktorblocks eingegeben wird, beispielsweise vom Netzbetreiber oder von einer Parksteuerung, wenn die Windenergieanlage in einem Windpark angeordnet ist.

Erfindungsgemäß wird zudem ein Windpark vorgeschlagen, der mehrere Windenergieanlagen zum Einspeisen elektrischer Leistung in ein elektrisches Versorgungsnetz an einem Netzanschlusspunkt aufweist. Dieser Windpark umfasst

- ein Parküberwachungsmittel zum Überwachen eines für eine Leistungsbilanz im elektrischen Versorgungsnetz repräsentativen Leistungsindikators, wobei die Leistungsbilanz eine Differenzleistung angibt als Differenz zwischen

  - in das elektrische Versorgungsnetz durch Energieerzeuger eingespeister Leistung und

  - aus dem elektrischen Versorgungsnetz durch Verbraucher entnommener Leistung, wobei die Leistungsbilanz positiv ist, wenn mehr Leistung eingespeist als entnommen wird,

- ein Parkbestimmungsmittel zum Bestimmen einer Ausgleichsenergiemenge in Abhängigkeit des Leistungsindikators,

- eine Parksteuerungsvorrichtung zum Steuern der Windenergieanlagen so, dass

  - die Windenergieanlagen eine elektrische Grundleistung in Abhängigkeit verfügbarer Windleistung einspeisen, und dass

- die Windenergieanlagen die Einspeisung der elektrischen Grundleistung um die bestimmte Ausgleichsenergiemenge verändern.

Ein solcher Windpark kann somit, ähnlich wie oben zur Windenergieanlage beschrieben, eine Netzstützung durch konkretes Bestimmen und Einspeisen einer Ausgleichsenergiemenge vornehmen. Durch die Verwendung eines Windparks kann dabei eine im Wesentlichen größere Ausgleichsenergiemenge vorgesehen und eingespeist bzw. die Einspeisung um diese Ausgleichsenergiemenge verringert werden, als dies mit einer einzelnen Windenergieanlage des Windparks möglich wäre.

Der Windpark weist dazu ein Parkbestimmungsmittel auf, das ähnlich wie das zuvor beschriebene Bestimmungsmittel der Windenergieanlage arbeitet und eine Ausgleichsenergiemenge in Abhängigkeit des Leistungsindikators bestimmt. Das Parkbestimmungsmittel berücksichtigt dabei die Größe, Eigenschaft und auch den Betriebszustand der Windenergieanlagen im Windpark. Zur Umsetzung ist dann die Parksteuerungsvorrichtung vorgesehen, die die Windenergieanlagen entsprechend steuert, nämlich so, dass zusätzlich zu der elektrischen Grundleistung die bestimmte Ausgleichsenergiemenge eingespeist wird bzw. wenn diese negativ ist, die Grundleistung entsprechend verringert wird. Die Parksteuerungsvorrichtung steuert dabei die Windenergieanlagen nicht in jedem Detail, sondern gibt vorzugsweise entsprechende Sollwerte zum Einspeisen vor, besonders Leistungssollwerte. Die konkrete Umsetzung kann durch die Windenergieanlagen erfolgen.

Die Vorgabe der Ausgleichsenergiemenge ist entsprechend auf die Windenergieanlagen umzusetzen. Dies kann beispielsweise durch einen prozentualen Wert erfolgen, den die Parksteuerungsvorrichtung beispielsweise als einen Wert ausgeben kann und der dann für jede der Windenergieanlagen zu einem entsprechenden prozentualen Wert der Ausgleichsenergiemenge der konkreten Windenergieanlage führt, z. B. bezogen auf eine maximale Ausgleichsenergiemenge der jeweiligen Windenergieanlage. Es kann beispielsweise auch auf eine beliebige Referenzenergiemenge bezogen werden.

Vorzugsweise weist der Windpark Windenergieanlagen gemäß wenigstens einer vorstehend beschriebenen Ausführungsformen auf. In diesem Fall kann das Parküberwachungsmittel durch ein Überwachungsmittel der Windenergieanlage gebildet werden. Es kann dann auch das Parkbestimmungsmittel und/oder die Parksteuerungsvorrichtung entfallen oder an die Windenergieanlagen angepasst sein. Insbesondere wird vorgeschlagen, dass die Parksteuerungsvorrichtung einen Ortsfaktor der Windenergieanlagen beeinflussen kann, insbesondere auf den Eingang des Ortsfaktorblocks zugreift und dort eine entsprechende Größe eingibt, um den Ortsfaktor zu beeinflussen.

Vorzugsweise wird für den Windpark vorgeschlagen, dass ein Parkenergiespeicher vorgesehen ist zum Speichern zusätzlicher Energie zum Bereitstellen der Ausgleichsenergiemenge oder eines Teils davon. Somit kann zusätzlich zu den Windenergieanlagen der Windpark noch eine weitere Speichervorrichtung, nämlich diesen Parkenergiespeicher, vorsehen. Optional ist dazu eine Parkeinspeisevorrichtung vorgesehen, die ihrerseits, insbesondere unabhängig von den Windenergieanlagen, Energie aus dem Parkenergiespeicher in das elektrische Versorgungsnetz einspeist. Dafür kann beispielsweise eine zusätzliche Wechselrichtervorrichtung vorgesehen sein. Das Einspeisen unabhängig von den Windenergieanlagen verwendet eine eigene Parkeinspeisevorrichtung, ist vorzugsweise aber, besonders unter Verwendung der Parksteuerungsvorrichtung, auf die Einspeisung der elektrischen Leistung der übrigen Windenergieanlagen abgestimmt. Dadurch kann eine Stützung des elektrischen Versorgungsnetzes verbessert werden, indem sowohl zusätzliche Energie zum Stützen durch diesen Parkenergiespeicher bereitgestellt werden kann, als auch eine von den Windenergieanlagen unabhängige und damit gut ergänzbare Einspeisung und Netzstützung vorgesehen sein kann.

Der Energiespeicher kann auch in den einzelnen Windenergieanlagen und/oder im DC-Zwischenkreis eines Wechselrichter, bzw. mehrerer Wechselrichter vorgesehen sein.

Wenn die bestimmte Ausgleichsenergiemenge negativ ist, kann auch vorgesehen sein, Energie aus dem elektrischen Versorgungsnetz zu entnehmen und in den Parkenergiespeicher einzuspeisen. Im einfachsten Fall können hierbei die Windenergieanlagen unverändert weiterbetrieben werden. Die Windenergieanlagen können also in einem solchen Fall einfach die Einspeisung der Grundleistung fortsetzen ohne diese zu erhöhen oder zu verringern.

Gemäß einer Ausführungsform wird vorgeschlagen, dass

-  die Parksteuerungsvorrichtung einen Ortsfaktorparkblock aufweist zum Bereitstellen eines ersten und/oder zweiten Ortsfaktors, wobei der Ortsfaktorparkblock einen Eingang aufweist, an dem eine den Ortsfaktor beeinflussende Größe eingegeben werden kann, und wobei

-  sich die Ausgleichsenergiemenge berechnet aus einem Produkt aus der Änderung des Leistungsindikators und dem ersten Ortsfaktor oder dass außerdem oder alternativ

-  sich die Ausgleichsenergiemenge berechnet aus einem Produkt aus dem Leistungsindikator und dem zweiten Ortsfaktor.

Hiermit kann auch ein Windpark von extern über die Veränderung des einen oder der mehreren Ortsfaktoren gesteuert oder angepasst werden. Es kann dadurch von extern, beispielsweise durch einen Netzbetreiber, der Ortsfaktor oder die Ortsfaktoren und damit die Ausgleichsenergiemenge verändert werden.

Dadurch wird, das gilt nicht nur für diesen Windpark, sondern auch für die beschriebenen Windenergieanlagen und die beschriebenen Verfahren, eine hohe Flexibilität dieser Netzstützung erreicht. Insbesondere kann auf eine Änderung der Leistungsbilanz unmittelbar reagiert werden, weil die jeweilige Ausgleichsenergiemenge abhängig davon bestimmt wird. Zusätzlich kann aber diese Abhängigkeit beeinflusst werden und damit kann das Systemverhalten des elektrischen Versorgungsnetzes beeinflusst werden.

Ein weiterer Vorschlag ist, steuerbare Lasten als weitere Realisierungsform vorzusehen, um negative Energie bereitzustellen. Dazu oder zusätzlich wird vorgeschlagen, dass ein Parkregler, nämlich ein zentraler Regler eines Windparks, der auch als Windparkregler bezeichnet werden kann, Verbraucher im Verteilnetz bzw. im elektrischen Versorgungsnetz steuert, um dadurch den Verbrauch bei Bedarf zu reduzieren. Dadurch kann die Leistungsbilanz erhöht werden.

Die Erfindung wird nun nachfolgend anhand von Ausführungsbeispielen unter Bezugnahme auf die begleitenden Figuren näher erläutert.

Figur 1     zeigt eine Windenergieanlagen in einer perspektivischen Ansicht.

Figur 2     zeigt einen Windpark schematisch.

Figur 3     zeigt einen Ausschnitt aus einem elektrischen Versorgungsnetz mit einigen das Verhalten des elektrischen Versorgungsnetzes beeinflussenden Elementen.

Figur 4     veranschaulicht Möglichkeiten, eine Ausgleichsenergiemenge zu bestimmen.

Figur 5     veranschaulicht in einem Diagramm eine mögliche Art und Wirkungsweise der Einspeisung von Ausgleichsenergie.

Figur 6     veranschaulicht in einem weiteren Diagramm eine weitere mögliche Art und Wirkungsweise der Einspeisung von Ausgleichsenergie.

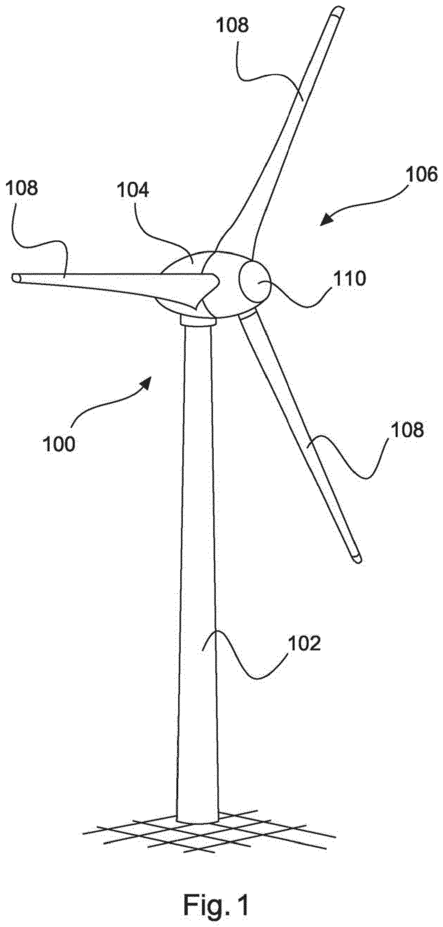

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

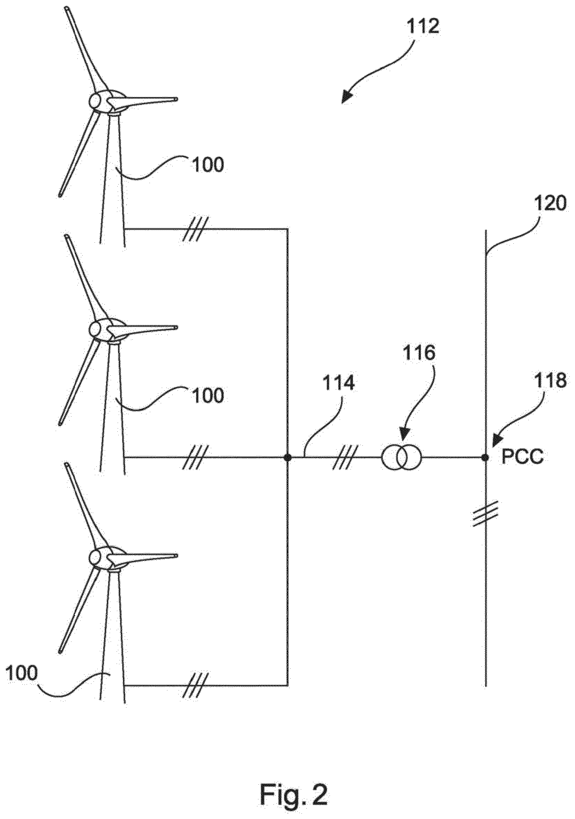

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

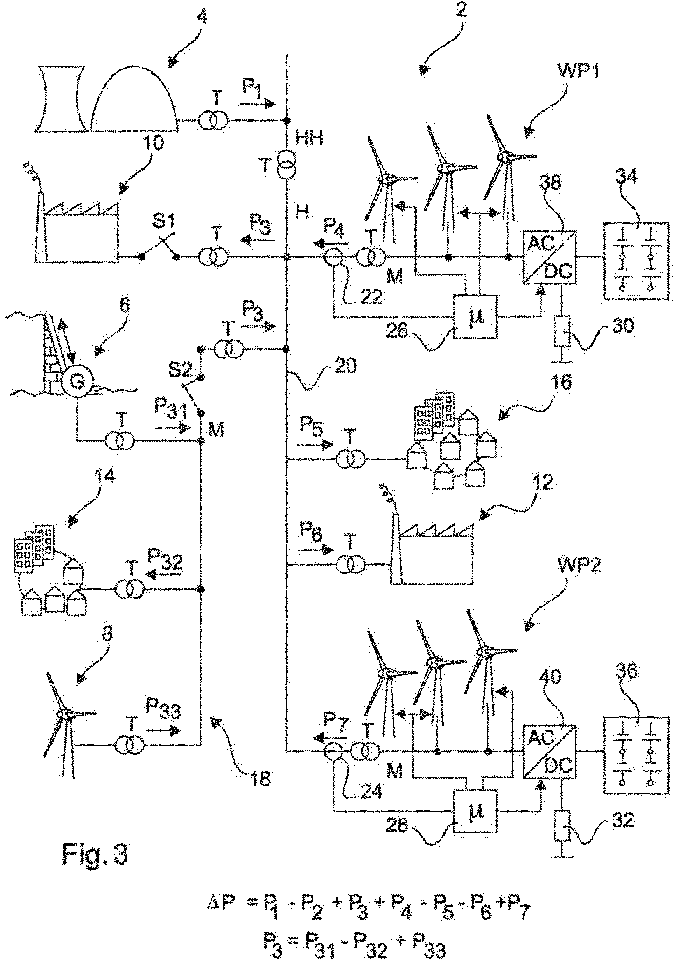

Fig. 3 zeigt einen Teil eines elektrischen Versorgungsnetzes 2, das verschiedene Leitungsabschnitte für verschiedene Spannungshöhen andeutet, nämlich für Höchstspannung HH, Hochspannung H und Mittelspannung M. Auch Niederspannungsabschnitte kommen vor, die hier aber nicht weiter gekennzeichnet sind. Teil des elektrischen Versorgungsnetzes ist ein Großkraftwerk 4, ein Wasserkraftwerk 6, eine Windenergieanlage 8, die einer Windenergieanlage 100 gemäß Fig. 1 bzw. Fig. 2 entspricht, und ein erster Windpark WP1 und ein zweiter Windpark WP2. Das sind in das elektrische Versorgungsnetz 2 einspeisende Energieerzeuger.

Als Verbraucher sind in Fig. 3 veranschaulicht eine erste Fabrik 10 und eine zweite Fabrik 12 sowie eine erste Stadt 14 und eine zweite Stadt 16. Für verschiedene Anschlüsse und auch die Verbindung zwischen dem Höchstspannungsnetz und dem Hochspannungsnetz sind Transformatoren T vorgesehen, die zwar durch denselben Buchstaben T gekennzeichnet sind, natürlich aber unterschiedlich dimensioniert sind.

Zur Veranschaulichung ist zudem ein Schalter S1 zum Anschließen bzw. Trennen der ersten Fabrik 10 vorgesehen, sowie ein Schalter S2 zum Anschließen bzw. Trennen des Wasserkraftwerks 6, der ersten Stadt 14 und der Windenergieanlage 8. Das Wasserkraftwerk 6, die erste Stadt 14 und die Windenergieanlage 8 sind insoweit in einem Teilnetz 18 zusammengefasst. Der zweite Schalter S2 kann somit das Teilnetz 18 von dem verbleibenden Netz des elektrischen Versorgungsnetzes 2 trennen bzw. nach einer Trennung wieder verbinden. In Fig. 3 wird zunächst davon ausgegangen, dass der erste und zweite Schalter jeweils geschlossen sind und alle gezeigten Energieerzeuger und Verbraucher mit dem elektrischen Versorgungsnetz verbunden sind und in dieses einspeisen bzw. Leistung daraus entnehmen.

Unter der Annahme, dass die Energieerzeuger und Verbraucher, die in Fig. 3 in dem elektrischen Versorgungsnetz 2 gezeigt sind, die einzigen bzw. einzigen relevanten Energieerzeuger bzw. Verbraucher sind, ergibt sich für die Leistungsbilanz ΔP folgender Zusammenhang:

$$\Delta P = P_1 - P_2 + P_3 + P_4 - P_5 - P_6 + P_7$$

wobei Folgendes gilt: $P_3 = P_{31} - P_{32} + P_{33}$

Dabei werden die Leistungen $P_1$ bis $P_7$ bzw. $P_{31}$ bis $P_{33}$ zunächst jeweils ihrem Wert nach als positiv angenommen, und entsprechend weisen die Pfeile in der Fig. 3 für die jeweiligen Leistungen von dem Energieerzeuger weg und zum elektrischen Versorgungsnetz 2 hin bzw. zum Verbraucher hin und dabei vom elektrischen Versorgungsnetz weg. Entsprechend werden die Leistungen der Energieerzeuger positiv und die der Verbraucher negativ berechnet.

Die Leistung $P_3$ betrifft die von dem Teilnetz 18 in das elektrische Versorgungsnetz 2 bzw. seinen Hauptstrang 20 eingespeiste Leistung. Dieser Wert kann auch negativ werden, besonders dann, wenn das Wasserkraftwerk 6 und auch die Windenergieanlage 8 keine Leistung erzeugen bzw. zusammen weniger Leistung erzeugen als die erste Stadt 14 verbraucht, wenn also die Summe aus $P_{31}$ und $P_{33}$ kleiner ist als $P_{32}$.

Wird nun zunächst davon ausgegangen, dass die Leistungsbilanz ΔP = 0 ist, das elektrische Versorgungsnetz 2 also im Wesentlichen in einem stationären Zustand arbeitet, wird keine Stützenergie notwendig sein. Besonders die Windenergieanlage 8 und die beiden Windparks WP1 und WP2 könnten dann im klassischen Netzparallelbetrieb arbeiten, also gerade so viel Leistung einspeisen, wie sie dem Wind entnehmen können.

Wird nun beispielsweise die erste Fabrik 10 vom Netz getrennt, wird also zumindest symbolisch der erste Schalter S1 geöffnet, so könnte die Verbrauchsleistung P2 der ersten Fabrik 10 auf null abfallen und die Leistungsbilanz ΔP wäre dann positiv. Es würde also mehr Leistung in das elektrische Versorgungsnetz 2 eingespeist werden, als die angeschlossenen Verbraucher entnehmen. Diese positive Leistungsbilanz können die Windparks WP1 und WP2 beispielsweise durch einen Messaufnehmer 22 bzw. 24 erfassen und in einer Parksteuerungsvorrichtung 26 bzw. 28 auswerten und darauf entsprechend reagieren. Die Erfassung mittels der Messaufnehmer 22 bzw. 24 kann in der Erfassung der Frequenz bestehen, um nur ein Beispiel zu nennen. Die Informationen können aber auch anderweitig ermittelt werden, einschließlich dadurch, dass solche Informationen vom Netzbetreiber zur Verfügung gestellt werden.

In der Parksteuerungsvorrichtung 26 bzw. 28 kann dann jeweils eine Ausgleichsenergiemenge berechnet werden, die in dem genannten Beispiel des Leistungsüberschusses im elektrischen Versorgungsnetz 2 zu einem negativen Wert für die Ausgleichsenergie in beiden Fällen führen müsste. Die beiden Windparks WP1 und WP2 würden demnach die Grundleistung, die sie zuvor im genannten Netzparallelbetrieb eingespeist haben, nun um die jeweils berechnete Ausgleichsenergie reduzieren. Die Leistungsbilanz bzw. ein entsprechender Indikator dafür, der hier beispielsweise als Frequenz genannt wurde, würde weiterhin überwacht werden. Entsprechend könnte in dem nächsten Zeitpunkt, beispielsweise in einem nächsten Tastzeitpunkt, erneut eine Ausgleichsenergiemenge berechnet werden.

Je nach Größe der jeweils berechneten Ausgleichsenergiemenge, die in diesem Fall weniger einzuspeisen wäre, kann eine Anpassung des Betriebs der Windenergieanlagen ausreichend sein, oder es käme auch in Betracht, Leistung durch einen thermischen Widerstand, der auch als Chopper bezeichnet werden kann, zu vernichten, bzw. in Wärme umzuwandeln. Das kann beispielsweise in jeder Windenergieanlage des Windparks WP1 bzw. WP2 erfolgen, oder es kann ein separater Chopper vorgesehen sein, der hier als Chopper 30 bzw. 32 exemplarisch eingezeichnet ist. Es kommt auch in Betracht, diese Ausgleichsenergiemenge oder einen Teil davon in den Batteriespeicher 34 bzw. 36 einzuspeichern. Hierzu ist zu erläutern, dass nach einer Weile die aktivierte Regelleistung von langsameren Erzeugern im Netz den Ausgleich der Energiebilanz übernimmt oder zumindest teilweise übernehmen kann. Eine kurzfristige Stützung kann daher bereits ausreichend sein.

Der Einfachheit halber sei zu Zwecken der Veranschaulichung angenommen, dass die beiden Windparks WP1 und WP2 im Wesentlichen identisch sind, besonders gleich viele Windenergieanlagen mit gleich viel Nennleistung aufzuweisen. Die Windparks WP1 und WP2 unterscheiden sich allerdings in ihrer Position im elektrischen Versorgungsnetz. Der erste Windpark WP1 ist in der Nähe der ersten Fabrik 10 bzw. dem Punkt angeschlossen, an dem die erste Fabrik 10 in das elektrische Versorgungsnetz bzw. in den Hauptstrang 20 einspeist. Der zweite Windpark WP2 ist hingegen weiter von diesem Punkt, in dem die erste Fabrik 10 einspeist, entfernt, als der erste Windpark WP1. Damit kann sich auch besonders eine netzstützende Maßnahme der jeweiligen Windparks WP1 und WP2 unterschiedlich auswirken. Etwas vereinfacht ausgedrückt wirkt sich das beschriebene Abschalten der ersten Fabrik 10 direkter auf den ersten Windpark WP1 aus als auf den zweiten Windpark 2.

Es wird somit nun vorgeschlagen, diese unterschiedlichen Anschlusspositionen der beiden Windparks WP1 und WP2 bei dem Netzstützungsmechanismus zu berücksichtigen. Besonders wird vorgeschlagen, dass die Netzstützungsmaßnahme des ersten Windparks WP1 stärker gewählt werden als die des zweiten Windparks WP2. Besonders wird vorgeschlagen, dass der erste Windpark WP1 mehr Stützenergie bereitstellt bzw. in diesem Fall der überhöhten Leistung mehr Stützenergie entnimmt als der zweite Windpark WP2. Gleichzeitig sollte aber möglichst das grundsätzliche Verhalten dieser Netzstützung, also der zusätzlichen Einspeisung von Ausgleichsenergie bzw. Entnahme von Ausgleichsenergie in gleicher Art und Weise ablaufen. Dafür wird vorgeschlagen, dass die jeweils, also im ersten Windpark WP1 und im zweiten Windpark WP2, bestimmte bzw. berechnete Ausgleichsenergiemenge nicht nur von der Leistungsbilanz bzw. einem Indikator der Leistungsbilanz abhängt, sondern auch von einer Ortsinformation. Insbesondere hängt sie ab von einem Ortsfaktor, der diese Unterschiede der Anschlusssituation des ersten Windparks WP1 einerseits und des zweiten Windparks WP2 andererseits berücksichtigt.

Besonders kann hier ein Ortsfaktor vorgesehen sein, der einen Wert zwischen 0 und 1 oder alternativ einen Wert zwischen 0,5 und 2 annimmt. Er könnte für den ersten Windpark WP1 dann den Wert 2 annehmen und für den zweiten Windpark WP2 den Wert 0,5. In diesem exemplarischen Beispiel könnte ein Ortsfaktor mit dem Wert 1 als Normalwert oder Durchschnittswert angesetzt werden, und der Wert wäre somit für den ersten Windpark WP1 doppelt so groß wie dieser Normalwert oder Durchschnittswert, und für den zweiten Windpark WP2 wäre er halb so groß. Dies soll aber nur der Veranschaulichung dienen. Jedenfalls könnte hier die Ausgleichsenergiemenge jeweils gleich schnell und mit gleichem Algorithmus und damit auch dem Grunde nach gleicher Dynamik bestimmt werden, allerdings mit unterschiedlichen Größen für den ersten Windpark WP1 einerseits und den zweiten Windpark WP2 andererseits. Es kommen aber auch andere Berücksichtigungen in Betracht, wie auch beispielsweise, andere Dynamiken vorzusehen.

Die vorgeschlagene Lösung, eine Ausgleichsenergiemenge zu bestimmen und zusätzlich einzuspeisen bzw. die Einspeisung um diese zu verringern ist besonders für eine kurzzeitige Netzstützung im Sekundenbereich, also für Zeiten unter 10 s, vorgesehen, insbesondere für Zeiten kleiner als 5 s. In der Zeit können längerfristige Maßnahmen gestartet werden, die einen Leistungsausgleich längerfristig erreichen können, sodass sich idealerweise wieder eine Leistungsbilanz $\Delta P$ von 0 einstellt. Eine Möglichkeit eines etwas längerfristigen Ausgleichs bietet das exemplarisch gezeigte Wasserkraftwerk 6. Es kommen aber auch andere Kraftwerke, wie beispielsweise Gaskraftwerke, in Betracht, um nur ein weiteres Beispiel zu nennen. Für noch längere Zeiten können dann auch Großkraftwerke ihre eingespeiste Leistung anpassen.

Liegt nun wieder eine ausgeglichene Leistungsbilanz vor, ist die Leistungsbilanz $\Delta P$ also etwa 0 und schaltet sich dann die erste Fabrik 10 wieder zu, wird also der symbolisch eingezeichnete Schalter S1 geschlossen, während die erste Fabrik 10 auch Leistung bezieht, kann sich erneut eine Situation ergeben, in der die Leistungsbilanz $\Delta P$ nicht mehr ausgeglichen ist. Besonders in diesem geschilderten Fall, wenn also plötzlich die Leistung P2 entnommen wird, wird die Leistungsbilanz $\Delta P$ negativ.

Zum kurzfristigen Stützen können dann besonders die beiden Windparks WP1 und WP2 zusätzliche Energie einspeisen. Dafür wird jeweils eine Ausgleichsenergiemenge bestimmt und eingespeist. Diese Ausgleichsenergiemenge kann zum Teil oder vollständig aus Rotationsenergie der Windenergieanlagen des Windparks verwendet werden. Außerdem oder alternativ kann Energie aus dem Batteriespeicher 34 bzw. 36 genommen werden. Dafür kann der Wechselrichter 38 bzw. 40 Energie aus dem Batteriespeicher 34 bzw. 36 entnehmen und in Wechselstrom wandeln und über den jeweiligen Trafo T der jeweiligen Grundleistung des Windparks WP1 bzw. WP2 ergänzen.

Auch hier wird die Ausgleichsenergiemenge jeweils abhängig von der Leistungsbilanz oder einem Indikator der Leistungsbilanz bestimmt. Zusätzlich wird auch hier vorgeschlagen, eine zusätzliche Variation vorzusehen, nämlich wird dies hier in Abhängigkeit der Position vorgeschlagen, an der der jeweilige Windpark WP1 bzw. WP2 an das elektrische Versorgungsnetz 2 bzw. den Hauptstrang 20 angeschlossen ist. Hier gilt sinngemäß dasselbe, was oben für den Fall erläutert wurde, bei dem die Leistungsbilanz $\Delta P$ durch Öffnen des Schalters S1 positiv geworden ist.

Hier kommt hinzu, dass beim Einspeisen zusätzlicher Energie und damit beim Bestimmen bzw. Berechnen der Ausgleichsenergiemenge auch vorgeschlagen wird, eine Energiereserve zu berücksichtigen. Für das veranschaulichte Beispiel gemäß Fig. 3 kann sich diese Energiereserve zusammensetzen aus entnehmbarer Rotationsenergie aus den Windenergieanlagen und der vorhandenen und entnehmbaren Energie, die in dem Batteriespeicher 34 bzw. 36 vorhanden ist. Besonders bei der Rotationsenergie ist zu beachten, dass eine gewisse Drehzahlreduzierung, die mit der Entnahme von Rotationsenergie einhergeht, hingenommen werden kann. Es ist aber nicht zweckmäßig, die vollständige Rotationsenergie zu entnehmen und damit die Rotoren zum Stillstand zu bringen. Entsprechend sollte hier also als Energiereserve bzw. als Anteil der Energiereserve nicht die vollständige Rotationsenergie berücksichtigt werden, sondern nur die, die so entnommen werden kann, dass die Windenergieanlage danach noch sinnvoll weiter betrieben werden kann.

Eine Möglichkeit der Berücksichtigung der Energiereserve besteht darin, das Unterschreiten eines gewissen Grenzwertes, beispielsweise 10 % oder vorzugsweise 20% der maximal möglichen Energiereserve, zu überwachen. Solange mehr Energiereserve als dieser untere Grenzwert vorhanden ist, kann die Ausgleichsenergiemenge jeweils ohne Einschränkung dadurch berechnet werden. Wird ein solcher unterer Grenzwert unterschritten, kann ein Algorithmus zum Reduzieren der Ausgleichsenergiemenge bzw. ihrer Berechnung vorgesehen sein. Dies ist nur ein Beispiel der Berücksichtigung, es kommt auch in Betracht, eine Energiereserve bereits von Anfang an in einem Berechnungsalgorithmus zum Berechnen der Ausgleichsenergiemenge vorzusehen.

Durch die Berücksichtigung der Energiereserve wird nicht nur ganz generell berücksichtigt, dass nur endlich viel Energie vorhanden ist, sondern es kann hier auch gezielt auf die Berechnung der Ausgleichsenergiemenge Einfluss genommen werden. Auch bei einer Stützung des Netzes durch physikalische Eigenschaften eines direkt gekoppelten Synchrongenerators, was beispielsweise bei dem symbolisch eingezeichneten Großkraftwerk 4 der Fall sein dürfte, kann auch nur so viel Stützung vorgenommen werden, wie Rotationsenergie in dem Synchrongenerator vorhanden ist. Die begrenzende Wirkung durch die vorhandene Rotationsenergie ist dort aber nicht beeinflussbar. Mit Entnahme der Rotationsenergie wird der Synchrongenerator langsamer, und entsprechend ändert sich auch die Frequenz, mit der dieser direkt gekoppelte Synchrongenerator einspeist. Das führt auch dazu, dass beim Reduzieren dieser Generatordrehzahl bis zu einem unteren Grenzwert eine Netztrennung, Abschaltung oder Abtrennung eines Teilnetzes erfolgen kann. Dann ist plötzlich eine Einspeisung durch diesen Synchrongenerator überhaupt nicht mehr möglich, wenn seine Drehzahl unter einen Mindestwert abfällt. Das hat zum einen den Nachteil, dass seine Stützenergie dann sofort wegfällt, einschließlich der bis dahin eingespeisten Leistung. Es hat aber auch den Nachteil, dass die in dem Großkraftwerk erzeugte Leistung plötzlich nicht mehr abgegeben werden kann und irgendwie vernichtet werden muss. Besonders problematisch ist, dass durch das gesamte Fallen der Netzfrequenz häufig auch alle Großkraftwerke mit Synchrongeneratoren sich vom Netz trennen können und dadurch das Problem verschärfen.

Bei der vorgeschlagenen Lösung, die hier für die Windparks WP1 und WP2 beschrieben wurde, die grundsätzlich aber auch beispielsweise durch die Windenergieanlage 8 durchgeführt werden könnte, können diese Probleme vermieden werden. Zum einen kann gezielt gesteuert werden, wie auch in Abhängigkeit der vorhandenen Energiereserve das stützende Einspeisen vorgenommen wird. Zum anderen kann aber auch der Windpark bzw. die Windenergieanlage zumindest mit der Grundleistung selbst dann weiterbetrieben werden, wenn keine Energiereserve zum zusätzlichen Einspeisen mehr vorhanden ist. Es braucht keine Netztrennung durchgeführt zu werden, es kann auch weiterhin mit nicht optimaler Frequenz eingespeist werden, und es entsteht auch nicht das Problem, dass die Windparks bzw. die Windenergieanlagen Leistung erzeugen, die nicht eingespeist werden kann.

Es wird somit eine besonders flexible und anpassungsfähige Lösung zum Stützen des Netzes geschaffen. Die Stützeigenschaften jeder Windenergieanlage bzw. jedes Windparks können an die aktuelle Situation angepasst werden. Die Anpassung an den konkreten Ort der Einspeisung, also besonders den konkreten Ort des jeweiligen Netzanschlusspunktes in dem elektrischen Versorgungsnetz, ist dabei nur eine Situation, für die eine solche Anpassungsmöglichkeit sinnvoll ist. Eine andere Möglichkeit ist, dass besonders der Netzbetreiber des elektrischen Versorgungsnetzes über diese Anpassungsfähigkeit das elektrische Versorgungsnetz besser steuern kann. Mit einer flexiblen Anpassung können auch Vorhersagewerte besser berücksichtigt werden, zum Beispiel wenn mit einem besonders großen Sprung der Leistungsbilanz zu rechnen ist, oder wenn bekannt ist, dass ein Energieerzeuger, der Stützenergie liefern kann, aus welchen Gründen auch immer, nicht verfügbar ist. Oder es kann ganz generell berücksichtigt werden, wie viel Stützenergie aktuell im Netz, also im elektrischen Versorgungsnetz, verfügbar ist.

Im Übrigen bietet die Fig. 3 auch noch eine Veranschaulichung einer Abtrennung eines Teilnetzes, nämlich eine Abtrennung des Teilnetzes 18. Eine solche Abtrennung und entsprechend auch eine Wiederzuschaltung dieses Teilnetzes 18 können durch den symbolisch eingezeichneten zweiten Schalter S2 erfolgen. In diesem Fall kann sich eine Leistungsbilanz ΔP in dem verbleibenden elektrischen Versorgungsnetz 2 ergeben. Diese Änderung der Leistungsbilanz kann sich also insbesondere an dem Hauptstrang 20 ergeben. Da das Teilnetz 18 aus Energieerzeugern und auch einem Verbraucher besteht, könnte es zumindest theoretisch auch in diesem abgetrennten Zustand weiter funktionieren. Dabei ergibt sich natürlich auch, sollte nicht im Falle der Abtrennung die Leistung $P_3$= 0 sein, eine Veränderung der Leistungsbilanz in dem Teilnetz 18. Dies kann unter anderem auch durch die Windenergieanlage 8 in der Art und Weise ausgeglichen werden oder zumindest teilweise ausgeglichen werden, wie dies oben dem Grunde nach für die Windparks WP1 und WP2 beschrieben wurde. Aber auch dieses Teilnetz 18 ist nur eine Veranschaulichung und wäre in der Realität deutlich komplexer.

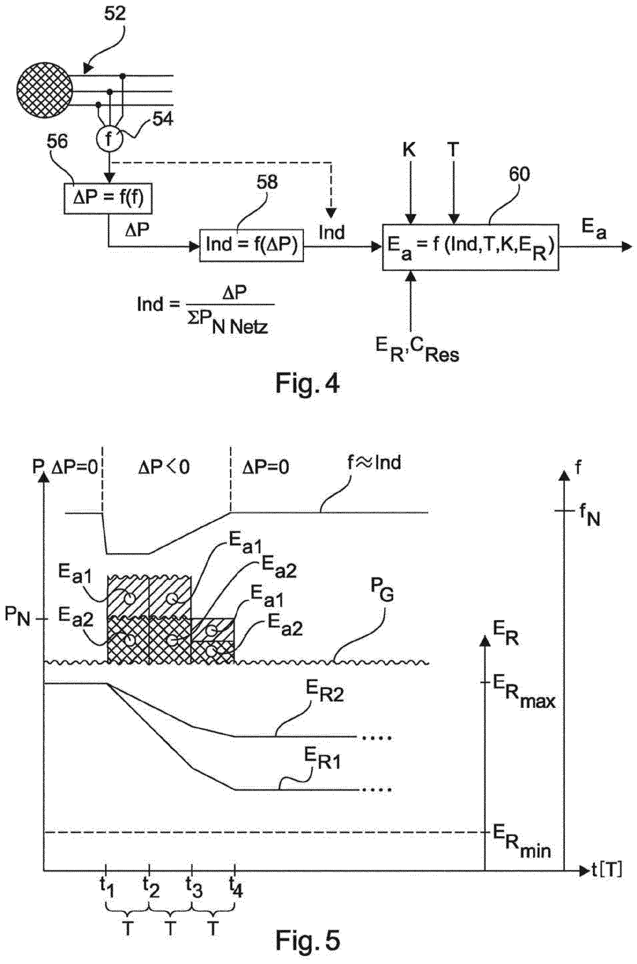

Fig. 4 veranschaulicht nun besonders die Art und Weise, wie eine Ausgleichsenergiemenge $E_a$ bestimmt werden kann. Dazu wird vorgeschlagen, dass an dem elektrischen Versorgungsnetz 52 eine Messung mit einem Messmittel 54 durchgeführt wird. Rein symbolisch ist dort eine dreiphasige Messung vorgeschlagen, und es ist beispielhaft die Messung einer Frequenz f als Beispiel illustriert. Üblicherweise wird es aber nicht nötig sein, in einem dreiphasigen Netz die Frequenz in allen drei Phasen zu messen. Da diese Messung mit dem Messmittel 54 aber veranschaulichend auch für andere Messungen stehen kann, wie beispielsweise Strom- und/oder Leistungsmessungen, ist hier diese dreiphasige Darstellung gewählt worden.

Das Messmittel 54 erfasst also beispielsweise eine Frequenz f und gibt diese in einen Bilanzbestimmungsblock 56 ein. Dieser veranschaulicht, dass die Leistungsbilanz ΔP dort als Funktion in Abhängigkeit der Frequenz, also in Abhängigkeit der dort eingegebenen Messgröße, bestimmt wird. Dabei kommt auch eine relative Bestimmung in Betracht, also beispielsweise eine prozentuale Abweichung, beispielsweise bezogen auf eine maximal zulässige Abweichung.

Die so bestimmte Leistungsbilanz ΔP wird dann in den Indikatorbestimmungsblock 58 eingegeben, und der Indikatorbestimmungsblock 58 bestimmt somit den Leistungsindikator Ind als Funktion in Abhängigkeit der Leistungsbilanz ΔP. Das Ergebnis ist somit der Leistungsindikator Ind.

Alternativ kann auch der Leistungsindikator Ind unmittelbar aus der mit dem Messmittel 54 erfassten Frequenz oder einem anderweitigen dort erfassten Wert bestimmt werden. In einem einfachen Fall kann sogar der Ausgang des Messmittels 54 unmittelbar als Leistungsindikator Ind verwendet werden, was durch den gestrichelten Pfeil angedeutet werden soll.

Der Leistungsindikator Ind wird dann in den Ausgleichsenergiebestimmungsblock 60 eingegeben, der somit als Bestimmungsmittel zum Bestimmen der Ausgleichsenergiemenge in Abhängigkeit des Leistungsindikators fungiert. Dieser Ausgleichsenergiebestimmungsblock 60 bestimmt somit die Ausgleichsenergie $E_a$ in Abhängigkeit des Leistungsindikators Ind. Als weitere Einflussgrößen werden eine Zeitkonstante T, die auch eine Tastzeit T sein kann, sowie ein Ortsfaktor K als auch eine Energiereserve $E_R$ vorgeschlagen. Die Tastzeit kann auch in ihrer Länge einem Bezugszeitintervall entsprechen. Eine Möglichkeit der Bestimmung der Ausgleichsenergiemenge $E_a$ ist durch eine Berechnung nach der folgenden Formel:

$$E_a = Ind \cdot K \cdot C_{Res} \cdot T$$

In dieser Formel bezeichnet $E_a$ die zu bestimmende Ausgleichsenergiemenge, Ind den Leistungsindikator, K einen Ortsfaktor, $C_{Res}$ einen Faktor zur Berücksichtigung der Energiereserve und T eine Abtastperiode bzw. Tastzeit oder ein Bezugszeitintervall.

Der Ortsfaktor K kann vorzugsweise zusammengesetzt sein aus dem Produkt von $K_0$ und $K_R$, wobei $K_0$ zur Normierung verwendet werden kann und $K_R$ als relativer Faktor die Funktion einer Gewichtung haben kann. $K_R$ kann vorzugsweise Werte von 0,5 bis 2 annehmen, um nur ein Beispiel zu nennen. Es kommt aber beispielsweise auch in Betracht, dass er Werte von 0 bis 1 annimmt, oder Werte von 0 bis 100 %, was mathematisch dasselbe ist, oder auch andere Wertebereiche. Statt eines Ortsfaktors K können aber auch andere Einflussgrößen zusätzlich oder alternativ vorgesehen sein, die nicht oder nicht nur den Ort des betreffenden Netzanschlusspunktes berücksichtigen. Gemäß einer Ausführungsform berücksichtigt aber der Ortsfaktor K, besonders sein relativer Anteil $K_R$, den Ort des Netzanschlusspunktes im elektrischen Versorgungsnetz.

Über den Faktor $C_{Res}$ kann die Energiereserve berücksichtigt werden. Eine Möglichkeit der Umsetzung ist, dass $C_{Res}$ den Wert 1 annimmt, solange die Energiereserve $E_R$ größer als eine minimale Energiereserve $E_{Rmin}$ ist. Diese minimale Energiereserve $E_{Rmin}$ kann beispielsweise 10 % oder 20 % einer maximalen Energiereserve betragen. Ist dann die Energiereserve $E_R$ kleiner als oder gleich dieser minimalen Energiereserve $E_{Rmin}$, so kann für diesen Berücksichtigungsfaktor $C_{Res}$ der Energiereserve beschrieben werden mit der Formel

$$C_{Res} = \frac{E_R}{E_{Rmin}}$$

Dieser Berücksichtigungsfaktor nimmt somit den Wert 1 an, solange noch ausreichend Energiereserve vorhanden ist. Geht diese aber zur Neige, so geht dieser in einen zur verbleibenden Restenergie proportionalen Faktor über.

Die Zeitkonstante T wird vorzugsweise klein gewählt, sodass sie maximal 1 s beträgt. Insbesondere kann diese Zeitkonstante T aber noch deutlich kleiner werden und sogar bis hinunter auf die Zeitdauer einer Abtastzeit heruntergehen, wie beispielsweise 100 ms, 50 ms, 20 ms oder nur 10 ms.

Der Leistungsindikator Ind kann beispielsweise berechnet werden als Quotient zwischen der Leistungsbilanz $\Delta P$ und der Summe der Nennleistungen aller Energieerzeuger des elektrischen Versorgungsnetzes bzw. zumindest des relevanten elektrischen Versorgungsnetzes. Alternativ kann der Leistungsindikator berechnet werden aus einer Frequenzänderung $\Delta f$ im Verhältnis zu einer maximal zulässigen Frequenzänderung $\Delta f_{max}$. Je nach Wahl der Berechnung des Leistungsindikators Ind kann dies natürlich Auswirkungen auf die oben genannte Berechnungsformel für die Ausgleichsenergiemenge haben. Besonders kann die Wahl der Berechnung des Leistungsindikators Ind und damit auch die Wahl des Leistungsindikators Ind als solcher durch den Grundwert oder Normierungswert $K_0$ des Ortsfaktors K berücksichtigt werden.

Die Ausgleichsenergiemenge kann auch gemäß einer Ausführungsform, die nicht auf die Merkmale gemäß Figur 4 beschränkt ist, sinngemäß als Ausgleichsleistung berechnet und verwendet werden, die der Ausgleichsenergiemenge geteilt durch ein bzw. das Bezugszeitintervall entspricht.

Fig. 5 veranschaulicht nun schematisch und beispielhaft die Wirkungsweise der vorgeschlagenen Lösung gemäß einer Ausführungsform. Auch dies soll besonders zur grundsätzlichen Erläuterung der vorgeschlagenen Lösung dienen. Grundsätzlich können die in Fig. 5 gezeigten Verläufe ein Ergebnis des Betreibens eines elektrischen Versorgungsnetzes 2 gemäß Fig. 3 sein.

Das Diagramm der Fig. 5 enthält mehrere Verläufe, die in Abhängigkeit der Zeit t aufgetragen sind. Als Einheit ist hier T angegeben und kann beispielsweise 1 s betragen. Der nachfolgend dargestellte maßgebliche Bereich des Diagramms der Fig. 5, der die Störung zeigt, also von $t_1$ bis $t_4$, würde sich dann über 3 s erstrecken. Diese Gesamtdauer von 3 s kann auch etwa als durchschnittlicher Wert für die dargestellte Störung angenommen werden. Für die Zeitkonstante T wird aber für die praktische Umsetzung vorgeschlagen, kleinere Werte zu verwenden, zumindest keine größeren Werte zu verwenden.

Als oberster Verlauf ist eine Frequenz f aufgetragen, die hier auch als Leistungsindikator Ind wirken kann. Zunächst, nämlich vor dem Zeitpunkt $t_1$, weist die Frequenz Nennfrequenz $f_N$ auf. Die Frequenz f weist also den wünschenswerten Wert auf, und die Leistungsbilanz $\Delta P$ beträgt idealerweise 0. Zum Zeitpunkt $t_1$ fällt dann die Frequenz f abrupt, zumindest steil, ab, was bedeutet, dass die Leistungsbilanz $\Delta P$ negativ ist. Zum Zeitpunkt $t_2$ steigt die Frequenz dann über den Zeitpunkt $t_3$ bis zum Zeitpunkt $t_4$ auf den Nennwert wieder an, und somit kann

ab dem Zeitpunkt $t_4$ angenommen werden, dass die Leistungsbilanz $\Delta P$ wieder 0 ist, also wieder ausgewogen ist. Die Darstellung ist natürlich nur veranschaulichend und idealisiert.

In dem Graph darunter wird die eingespeiste Leistung abgetragen. Bezogen auf die Fig. 3 wird davon ausgegangen, dass beide Windparks WP1 und WP2 dieselbe Grundleistung $P_G$ einspeisen. Dies ist durch eine etwa waagerechte Linie mit leichten angedeuteten Schwankungen eingezeichnet. Diese Grundleistung $P_G$ liegt in diesem Beispiel unter der Nennleistung $P_N$.

Zum Zeitpunkt $t_1$, wenn die Frequenz stark abfällt und somit von einer negativen Leistungsbilanz auszugehen ist, wird von dem Windpark WP1 bzw. in seiner Parksteuerungsvorrichtung 26 eine Ausgleichsenergiemenge $E_{a1}$ berechnet. Gleichzeitig berechnet der Windpark WP2 in seiner Parksteuerungsvorrichtung 28 eine Ausgleichsenergiemenge $E_{a2}$. Diese beiden Ausgleichsenergiemengen $E_{a1}$ und $E_{a2}$ werden für die Zeit T, also für den Zeitraum von $t_1$ bis $t_2$, berechnet und in diesen Zeitabschnitt auch gezielt eingespeist. Die eingespeiste Leistung erhöht sich dafür von der Grundleistung $P_G$ entsprechend. Die jeweils bestimmte bzw. dann auch eingespeiste Ausgleichsenergiemenge $E_{a1}$ bzw. $E_{a2}$ ist somit der Flächeninhalt unter diesem gegenüber der Grundleistung $P_G$ erhöhten Leistungspegel. Die Ausgleichsenergiemenge $E_{a1}$ des ersten Windparks WP1 betrifft den gesamten Bereich bis hinunter zu dem Wert der Grundleistung $P_G$, wohingegen die zweite Ausgleichsenergiemenge $E_{a2}$ des zweiten Windparks WP2 nur halb so groß ist und nur den kreuzschraffierten Bereich betrifft.

Hier liegt zur Bestimmung der beiden Ausgleichsenergiemengen $E_{a1}$ bzw. $E_{a2}$ zunächst dieselbe Berechnung zugrunde, und es wurde eingangs erläutert, dass der Einfachheit halber davon ausgegangen wird, dass beide Windparks WP1 und WP2 zumindest gleich dimensioniert sind.

Die hier in dem Diagramm der Fig. 5 veranschaulichte Situation soll die Situation wiedergeben, bei der die erste Fabrik 10 durch Schließen des ersten Schalters S1 wieder zugeschaltet wird und damit durch plötzliche Entnahme der Leistung $P_2$ diesen Abfall der Leistungsbilanz verursacht. Der erste Windpark WP1 ist deutlich näher dran an dieser ersten Fabrik 10 und damit deutlich näher dran an der Ursache für diesen Leistungseinbruch. Entsprechend wird hier ein höherer Ortsfaktor K vorgeschlagen, der nämlich doppelt so groß ist wie bei dem Windpark WP2, der deutlich weiter weg angeordnet ist, dessen Netzanschlusspunkt also deutlich weiter weg von dem der ersten Fabrik 10 und damit von dem des ersten Windparks WP1 ist.

Entsprechend fallen also deswegen, nämlich wegen Wahl unterschiedlicher Ortsfaktoren K, die beiden Ausgleichsenergiemengen $E_{a1}$ und $E_{a2}$ unterschiedlich groß aus. Zum Zeitpunkt $t_2$ weist die Frequenz f, die hier als Leistungsindikator Ind fungiert, noch immer diesen niedrigen Wert auf, sodass im Grunde abermals diesel-

ben Ausgleichsenergiemengen $E_{a1}$ und $E_{a2}$ berechnet werden. Es ergeben sich also für den Bereich von $t_2$ bis $t_3$ nochmals dieselben eingespeisten Ausgleichsenergiemengen und damit nochmals dieselben beiden schraffiert bzw. kreuzschraffiert dargestellten Energieblöcke, die die Energiemenge anzeigen.

Zum Zeitpunkt $t_3$ hat sich die Frequenz und damit die Leistungsbilanz wieder etwas erholt, und somit werden dann die Ausgleichsenergiemengen $E_{a1}$ und $E_{a2}$ zwar nach wie vor auf die gleiche Art und Weise berechnet, auch mit denselben unterschiedlichen Ortsfaktoren K, kommen aber aufgrund der wieder zurückgeführten Frequenz f, also aufgrund des sich wieder veränderten Leistungsindikators Ind, zu geringeren Werten. In dem illustrierten Beispiel kommen sie nämlich etwa zu den halben Werten wie zuvor. Gleichzeitig ist aber die zweite Ausgleichsenergiemenge $E_{a2}$ wieder nur halb so groß wie die erste Ausgleichsenergiemenge $E_{a1}$. Ab dem Zeitpunkt $t_4$ hat sich die Situation wieder beruhigt, die Frequenz hat ihren Nennwert erreicht, und damit zeigt sie als Leistungsindikator Ind an, dass die Leistungsbilanz $\Delta P$ etwa 0 ist. Entsprechend werden auch keine Ausgleichsenergiemengen mehr bestimmt bzw. sie weisen den Wert 0 auf.

Gleichzeitig wird für beide Windparks WP1 und WP2 jeweils die Energiereserve $E_{R1}$ bzw. $E_{R2}$ berücksichtigt. Zum Zeitpunkt $t_1$ weisen beide noch jeweils ihre maximalen Werte, also die maximale Energiereserve $E_{Rmax}$, auf, fallen dann aber unterschiedlich stark ab, weil unterschiedliche Ausgleichsenergiemengen $E_{a1}$ und $E_{a2}$ berechnet, eingespeist und damit auch benötigt werden. In dem Diagramm ist aber auch ein Minimalwert der Energiereserve $E_{Rmin}$ eingezeichnet. Da keine der beiden Energiereserven $E_{R2}$ und $E_{R1}$ auf diesen Minimalwert $E_{Rmin}$ abfallen, hat dies in dem gezeigten Beispiel und für die gewählte Berücksichtigung der Energiereserve keinen Einfluss. Hier wird nämlich in diesem Beispiel vorgeschlagen, dass eine wie oben erläuterte Formel verwendet wird, bei der die Energiereserve über den Berücksichtigungsfaktor $C_{Res}$ einfließen kann und dass dieser Berücksichtigungsfaktor $C_{Res}$ auch so berechnet wird wie oben in einer Formel angegeben wurde, nämlich dass er den Wert 1 hat, solange die Energiereserve oberhalb der minimalen Energiereserve $E_{Rmin}$ liegt.

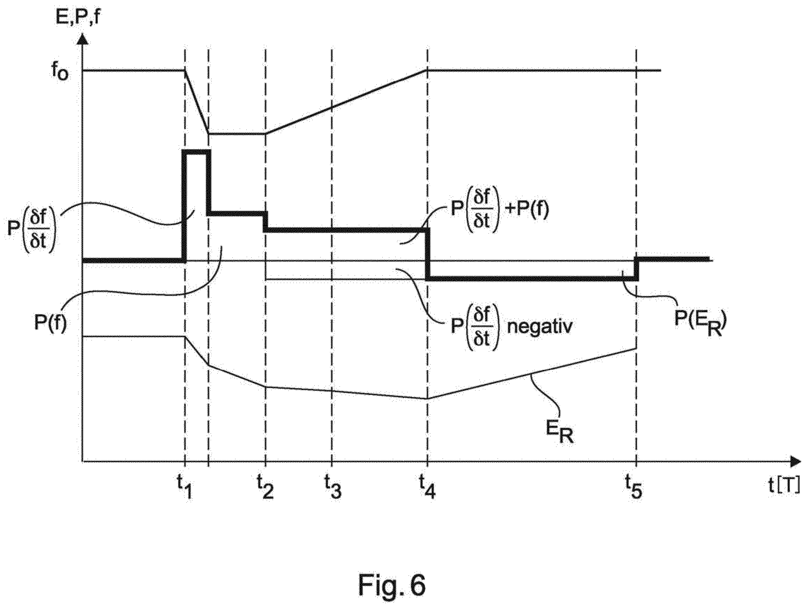

Figur 6 zeigt ein Diagramm, in dem beispielhaft über die Zeit, die an der Abszisse aufgetragen ist, ein Frequenzverlauf f, ein Leistungsverlauf P und ein Verlauf der Energiereserve $E_R$ eingezeichnet ist.

Die Frequenz startet zunächst mit nomineller Frequenz $f_0$. Gleichzeitig hat die Leistung P einen der in dem Moment vorhandenen Windleistung entsprechenden Wert und verläuft zunächst waagerecht. Zu der Leistung P wird vereinfachend davon ausgegangen, dass sich die Windleistung über den in Figur 6 betrachteten Zeitraum nicht ändert.

Außerdem beginnt die Energiereserve $E_R$ bei einem Wert, bei dem der entsprechende Speicher vollgeladen ist.

Zum Zeitpunkt $t_1$ stellt sich dann ein starker Frequenzeinbruch ein. Dieser weist auf ein deutliches und starkes Absacken der Leistungsbilanz hin. Diese starke Frequenzänderung führt bei der Leistung P zunächst zu einem hohen Wert mit einer für den kurzen Zeitraum vergleichsweise hohen Energiemenge. Diese große Ausgleichsenergiemenge dieses ersten Impulses soll besonders dem starken Frequenzabfall entgegenwirken.

Kurze Zeit später wird eine neue Ausgleichsenergiemenge berechnet, wobei außerdem ein größerer Zeitintervall angesetzt wird, nämlich bis zum Zeitpunkt $t_2$. Diese zweite Ausgleichsenergie ist ebenfalls noch groß, aber auf einen längeren Zeitraum verteilt. Diese zweite Ausgleichsenergiemenge ergibt sich aus dem dort vorherrschenden geringen Frequenzwert, wobei aber kein starker Frequenzabfall mehr involviert ist.

Zum Zeitpunkt $t_2$ steigt dann die Frequenz wieder an, so dass ein größeres Zeitintervall für die Ausgleichsenergie angesetzt wird, nämlich bis zum Zeitpunkt $t_4$. Aufgrund des großen Zeitintervalls wird, obwohl die Frequenz sich wieder erholt, eine vergleichsweise große Ausgleichsenergiemenge bereitgestellt, die die ansteigende Frequenz sowohl hinsichtlich ihrer Frequenzänderung als auch der absoluten Werte berücksichtigt.

Zum Zeitpunkt $t_4$ nimmt die Frequenz wieder den nominalen Frequenzwert $f_0$ an und die Frequenzänderung beträgt etwa 0. Das Einspeisen einer Ausgleichsenergiemenge ist nicht mehr erforderlich. Gleichwohl wird nun eine negative Ausgleichsenergiemenge vorgesehen, um nämlich den Speicher wieder zu laden.

Somit ist diesem Diagramm der Figur 6 zusätzlich der Verlauf der Energiereserve des betreffenden Speichers dargestellt. Es ist zu erkennen, dass die Energiereserve zum Zeitpunkt $t_1$ stark abfällt, dann bis zum Zeitpunkt $t_2$ weiter abfällt, aber nicht mehr so stark. Vom Zeitpunkt $t_2$ bis $t_4$ fällt sie noch schwächer ab und erreicht dann bei $t_4$ ihren Minimumwert. Bei $t_4$ wird nun keine Ausgleichsenergiemenge zur Netzstützung mehr benötigt und damit wird dann mit dem Wiederaufladen des Speichers begonnen. Die Energiereserve $E_R$ steigt dann also bis zum Zeitpunkt $t_5$ wieder an und hat dort wieder die volle Ladung erreicht. Die Ausgleichsenergiemenge entspricht dann ab dem Zeitpunkt $t_5$ dem Wert 0. Die Leistung weist dann dort wieder den Wert auf, der aufgrund des vorherrschenden Windes bereitgestellt werden kann.

Diese Figur 6 veranschaulicht somit das Berechnen einer Ausgleichsenergiemenge, was von dem absoluten Wert der Frequenz f als auch einer Ableitung der Frequenz, also von df/dt abhängt, und was außerdem auch noch von der Energiereserve im Speicher abhängt.

Durch die vorgeschlagene Lösung kann somit durch die Verwendung eines Algorithmus sofort bei Eintreten des Leistungseinbruchs Energie zur Stützung ins Netz eingespeist werden. Gleichzeitig kann bei dieser dynamischen Berücksichtigung auch noch eine Berücksichtigung des Ortes des Netzanschlusspunktes vorgenommen werden. Dies hat keinen Einfluss auf die Spontanität der Netzstützung durch dieses Einspeisen der Ausgleichsenergiemengen, schafft aber gleichwohl die Möglichkeit einer flexiblen Handhabung. Diese flexible Handhabung kann über die Berücksichtigung des Ortes des Netzanschlusspunktes erfolgen, es kommen aber auch andere Möglichkeiten in Betracht. Es kommt auch in Betracht, eine Netzantwort auf diese Einspeisung der Ausgleichsenergiemenge zu berücksichtigen. Besonders dann, wenn ein Schwingen oder eine verstärkende Reaktion erfasst wird, kann über den Ortsfaktor K oder anderweitig eine Anpassung der Einspeisung der Ausgleichsenergiemenge, also auch eine Anpassung der Bestimmung der Ausgleichsenergiemenge, vorgenommen werden.

**Patentansprüche**

1. Verfahren zum Einspeisen elektrischer Leistung in ein elektrisches Versorgungsnetz mittels wenigstens einer Windenergieanlage oder eines mehrere Windenergieanlagen aufweisenden Windparks an einem Netzanschlusspunkt, wobei

   - mehrere Energieerzeuger Leistung in das elektrische Versorgungsnetz einspeisen und
   - mehrere Verbraucher Leistung aus dem elektrischen Versorgungsnetz entnehmen, sodass sich im elektrischen Versorgungsnetz eine Leistungsbilanz zwischen der eingespeisten und der entnommenen Leistung ergibt, die positiv ist, wenn mehr Leistung eingespeist als entnommen wird, und das Verfahren umfasst die Schritte:
   - Überwachen eines für die Leistungsbilanz im elektrischen Versorgungsnetz repräsentativen Leistungsindikators,
   - Bestimmen einer Ausgleichsenergiemenge in Abhängigkeit des Leistungsindikators,
   - Einspeisen einer elektrischen Grundleistung in Abhängigkeit verfügbarer Windleistung, und
   - Verändern, der Einspeisung der elektrischen Grundleistung um die bestimmte Ausgleichsenergiemenge.

2. Verfahren nach Anspruch 1, **dadurch gekennzeichnet, dass**

   - für die Windenergieanlage bzw. den Windpark eine Energiereserve bestimmt wird, die eine Energiemenge angibt, die zusätzlich zur elektrischen Grundleistung ins elektrische Versorgungsnetz eingespeist werden kann und
   - die Ausgleichsenergiemenge in Abhängigkeit der Energiereserve bestimmt wird.

3. Verfahren nach Anspruch 1 oder 2, **dadurch gekennzeichnet, dass**

   - die Bestimmung der Ausgleichsenergiemenge für ein Bezugzeitintervall erfolgt, und
   - in diesem Bezugzeitintervall die Einspeisung der Grundleistung um diese Ausgleichsenergiemenge verändert, also erhöht bzw. verringert wird.

4. Verfahren nach einem der vorstehenden Ansprüche, **dadurch gekennzeichnet, dass**

   - die Ausgleichsenergiemenge so in Abhängigkeit des Leistungsindikators bestimmt wird, dass sie positiv ist, die Einspeisung der Grundleistung sich also erhöht, wenn sich die Leistungsbilanz verringert und negativ ist, insbesondere unterhalb eines vorbestimmten unteren Grenzwertes liegt, und dass
   - die Ausgleichsenergiemenge so in Abhängigkeit des Leistungsindikators bestimmt wird, dass sie negativ ist, die Einspeisung der Grundleistung sich also verringert, wenn sich die Leistungsbilanz erhöht und positiv ist, insbesondere oberhalb eines vorbestimmten oberen Grenzwertes liegt.

5. Verfahren nach einem der vorstehenden Ansprüche, **dadurch gekennzeichnet, dass**

   - die Ausgleichsenergiemenge mit einer Abhängigkeitsfunktion von dem Leistungsindikator abhängt und
   - die Abhängigkeitsfunktion veränderbar ist und/oder
   - die Abhängigkeitsfunktion von dem Netzanschlusspunkt abhängt.

6. Verfahren nach Anspruch 5, **dadurch gekennzeichnet, dass** die Abhängigkeitsfunktion in Abhängigkeit wenigstens einer der Information verändert, eingestellt oder ausgewählt wird aus der Liste aufweisend:

   - eine Systemeigenschaft des elektrischen Versorgungsnetzes,
   - ein Systemverhalten des elektrischen Versorgungsnetzes,
   - ein Systemzustand des elektrischen Versorgungsnetzes,
   - eine Abhängigkeitsfunktionen einer weiteren Windenergieanlage oder eines weiteren Windparks,
   - eine externe Vorgabe, besonders des Betreibers des elektrischen Versorgungsnetzes, und
   - ein Ereignis im elektrischen Versorgungsnetz, besonders eine Abtrennung oder Wiederverbindung eines Netzabschnitts.

7. Verfahren nach einem der vorstehenden Ansprüche, **dadurch gekennzeichnet, dass** das elektrische Versorgungsnetz eine Netzfrequenz aufweist und der Leistungsindikator bestimmt wird aus wenigstens einer der Größen aus der Liste umfassend

    - die Netzfrequenz,
    - eine zeitliche Ableitung der Netzfrequenz
    - eine Netzspannung,
    - eine gemessene Leistungsdifferenz,
    - eine der Netzfrequenz nachgebildete Modellfrequenz und
    - einen Phasenwinkel zwischen einer Phase der Netzspannung und einer Phase der Modellfrequenz.

8. Verfahren nach einem der vorstehenden Ansprüche, **dadurch gekennzeichnet, dass**

    - sich die Ausgleichsenergiemenge berechnet aus einem Produkt aus der Änderung des Leistungsindikators und einem einstellbaren ersten Ortsfaktor oder dass außerdem oder alternativ
    - sich die Ausgleichsenergiemenge berechnet aus einem Produkt aus dem Leistungsindikator und einem einstellbaren zweiten Ortsfaktor.

9. Verfahren nach einem der vorstehenden Ansprüche, **dadurch gekennzeichnet, dass**

    - die Windenergieanlage bzw. der Windpark zum Einspeisen der elektrischen Leistung in das elektrische Versorgungsnetz wenigstens eine Einspeisevorrichtung aufweist und die Einspeisevorrichtung wenigstens einen Betriebsbereich aufweist, der einzuhalten ist, um einen Anlagenschutz oder vorgeschriebene Grenzwerte einzuhalten, wobei
    - zum Einspeisen der Ausgleichsenergiemenge der Betriebsbereich für ein vorbestimmtes Ausgleichszeitintervall verlassen wird, insbesondere wenigstens ein oberer Grenzwert des Betriebsbereichs um bis zu einem vorbestimmten Überschreitungswert überschritten wird, wenn die Einspeisung der Grundleistung erhöht wird.

10. Verfahren nach Anspruch 9, **dadurch gekennzeichnet, dass**

    - zum Einspeisen der Ausgleichsenergiemenge der Betriebsbereich für das vorbestimmte Ausgleichszeitintervall derart verlassen wird, dass
    - eine Taktfrequenz zum Erzeugen eines modulierten Stromsignals verringert wird und/oder
    - dass ein Toleranzband zum Erzeugen eines modulierten Stromsignals vergrößert wird.

11. Verfahren nach einem der vorstehenden Ansprüche, **dadurch gekennzeichnet, dass** zum Einspeisen der Ausgleichsenergiemenge

    - Rotationsenergie der Windenergieanlage verwendet wird, wenn die Einspeisung der Grundleistung erhöht wird, oder
    - Energie als Rotationsenergie in die Windenergieanlage eingespeichert wird, wenn die Einspeisung der Grundleistung verringert wird und außerdem oder alternativ
    - eine Leistungsabregelung der Windenergieanlage erfolgt, wenn die Einspeisung der Grundleistung verringert wird.

12. Verfahren nach einem der vorstehenden Ansprüche, **dadurch gekennzeichnet, dass**

    - die Windenergieanlage bzw. wenigstens eine der Windenergieanlagen des Windparks einen Generator aufweist, der mit einer Generatordrehzahl betrieben wird,
    - ein Erwartungswert bestimmt wird, der angibt, ob eine Veränderung der Leistungsbilanz zu erwarten ist, und
    - die Drehzahl in Abhängigkeit des Erwartungswertes verändert wird, wenn dieser angibt, dass eine Veränderung der Leistungsbilanz zu erwarten ist.

13. Windenergieanlage zum Einspeisen elektrischer Leistung in ein elektrisches Versorgungsnetz an einem Netzanschlusspunkt, umfassend

    - ein Überwachungsmittel zum Überwachen eines für eine Leistungsbilanz im elektrischen Versorgungsnetz repräsentativen Leistungsindikators, wobei die Leistungsbilanz eine Differenzleistung angibt als Differenz zwischen

        - in das elektrische Versorgungsnetz durch Energieerzeuger eingespeister Leistung und
        - aus dem elektrischen Versorgungsnetz durch Verbraucher entnommener Leistung, wobei die Leistungsbilanz positiv ist, wenn mehr Leistung eingespeist als entnommen wird,

    - ein Bestimmungsmittel zum Bestimmen einer Ausgleichsenergiemenge in Abhängigkeit des Leistungsindikators,
    - eine Einspeisevorrichtung zum Einspeisen der elektrischen Leistung in das elektrische Versorgungsnetz an dem Netzanschlusspunkt,
    - eine Steuerungsvorrichtung zum Steuern der Einspeisevorrichtung so, dass

- die Einspeisevorrichtung eine elektrische Grundleistung in Abhängigkeit verfügbarer Windleistung einspeist, und dass
- die Einspeisevorrichtung die Einspeisung der elektrischen Grundleistung um die bestimmte Ausgleichsenergiemenge verändert.

14. Windenergieanlage nach Anspruch 13, **dadurch gekennzeichnet, dass** die Windenergieanlage, besonders die Steuerungsvorrichtung, dazu eingerichtet ist, ein Verfahren nach einem der Ansprüche 1 bis 12 auszuführen.

15. Windenergieanlage nach einem der Ansprüche 13 und 14, **dadurch gekennzeichnet, dass** wenigstens ein Reserveenergiespeicher vorgesehen ist zum Speichern einer bzw. der Energiereserve oder eines Teils davon.

16. Windenergieanlage nach einem der Ansprüche 13 bis 15, **dadurch gekennzeichnet, dass** wenigstens ein bzw. der Reserveenergiespeicher als zur Windenergieanlage oder zumindest zur Einspeisevorrichtung externer Energiespeicher ausgebildet ist.

17. Windenergieanlage nach einem der Ansprüche 13 bis 16, **dadurch gekennzeichnet, dass**

- die Steuerungsvorrichtung einen Ortsfaktorblock aufweist zum Bereitstellen eines ersten und/oder zweiten Ortsfaktors, wobei der Ortsfaktorblock einen Eingang aufweist, an dem eine den Ortsfaktor beeinflussende Größe eingegeben werden kann, und wobei
- sich die Ausgleichsenergiemenge berechnet aus einem Produkt aus der Änderung des Leistungsindikators und dem ersten Ortsfaktor oder dass außerdem oder alternativ
- sich die Ausgleichsenergiemenge berechnet aus einem Produkt aus dem Leistungsindikator und dem zweiten Ortsfaktor.

18. Windpark mit mehreren Windenergieanlagen zum Einspeisen elektrischer Leistung in ein elektrisches Versorgungsnetz an einem Netzanschlusspunkt, umfassend

- ein Parküberwachungsmittel zum Überwachen eines für eine Leistungsbilanz im elektrischen Versorgungsnetz repräsentativen Leistungsindikators, wobei die Leistungsbilanz eine Differenzleistung angibt als Differenz zwischen

- in das elektrische Versorgungsnetz durch Energieerzeuger eingespeister Leistung und
- aus dem elektrischen Versorgungsnetz durch Verbraucher entnommener Leistung, wobei die Leistungsbilanz positiv ist, wenn mehr Leistung eingespeist als entnommen wird,

- ein Parkbestimmungsmittel zum Bestimmen einer Ausgleichsenergiemenge in Abhängigkeit des Leistungsindikators,
- eine Parksteuerungsvorrichtung zum Steuern der Windenergieanlagen so, dass

- die Windenergieanlagen eine elektrische Grundleistung in Abhängigkeit verfügbarer Windleistung einspeisen, und dass
- die Windenergieanlagen die Einspeisung der elektrischen Grundleistung um die bestimmte Ausgleichsenergiemenge verändern.

19. Windpark nach Anspruch 18, **dadurch gekennzeichnet, dass** Windenergieanlagen gemäß einem der Ansprüche 13 bis 17 verwendet werden.

20. Windpark nach einem der Ansprüche 18 oder 19, **dadurch gekennzeichnet, dass** ein Parkenergiespeicher vorgesehen ist zum Speichern zusätzlicher Energie zum Bereitstellen der Ausgleichsenergiemenge oder eines Teils davon, und dass optional eine Parkeinspeisevorrichtung vorgesehen ist, um Energie aus dem Parkenergiespeicher in das elektrische Versorgungsnetz einzuspeisen.

21. Windpark nach einem der Ansprüche 18 bis 20, **dadurch gekennzeichnet, dass**

- die Parksteuerungsvorrichtung einen Ortsfaktorparkblock aufweist zum Bereitstellen eines ersten und/oder zweiten Ortsfaktors, wobei der Ortsfaktorparkblock einen Eingang aufweist, an dem eine den Ortsfaktor beeinflussende Größe eingegeben werden kann, und wobei
- sich die Ausgleichsenergiemenge berechnet aus einem Produkt aus der Änderung des Leistungsindikators und dem ersten Ortsfaktor oder dass außerdem oder alternativ
- sich die Ausgleichsenergiemenge berechnet aus einem Produkt aus dem Leistungsindikator und dem zweiten Ortsfaktor.

## Claims

1. A method for feeding electrical power into an electrical supply grid by means of at least one wind power installation or of a wind farm having a plurality of wind power installations at a grid connection point, wherein

- a plurality of energy generators feed power into the electrical supply grid and

- a plurality of consumers draw power from the electrical supply grid so that a power balance between the infed power and the drawn power results in the electrical supply grid, which power balance is positive when more power is fed in than drawn, and the method comprises the following steps:

- monitoring of a power indicator that is representative of the power balance in the electrical supply grid,

- determination of an amount of balancing energy depending on the power indicator,

- infeed of a basic electrical power depending on the available wind power, and

- changing of the infeed of the basic electrical power by the determined amount of balancing energy.

2. The method as claimed in claim 1, **characterized in that**

- an energy reserve is determined for the wind power installation or the wind farm, which energy reserve indicates an amount of energy that can be fed into the electrical supply grid in addition to the basic electrical power and

- the amount of balancing energy is determined depending on the energy reserve.

3. The method as claimed in claim 1 or 2, **characterized in that**

- the amount of balancing energy is determined for a reference time interval, and

- the infeed of the basic power is changed, that is to say is increased or reduced, by said amount of balancing energy in said reference time interval.

4. The method as claimed in one of the preceding claims, **characterized in that**

- the amount of balancing energy is determined depending on the power indicator so that said amount of balancing energy is positive, that is to say the infeed of the basic power increases, when the power balance reduces and is negative, in particular is below a predetermined lower limit value, and **in that**

- the amount of balancing energy is determined depending on the power indicator so that said amount of balancing energy is negative, that is to say the infeed of the basic power reduces, when the power balance increases and is positive, in particular is above a predetermined upper limit value.

5. The method as claimed in one of the preceding claims, **characterized in that**

- the amount of balancing energy depends on the power indicator with a dependency function and

- the dependency function is variable and/or

- the dependency function depends on the grid connection point.

6. The method as claimed in claim 5, **characterized in that** the dependency function is changed, adjusted or selected depending on at least one of the pieces of information from the list having:

- a system property of the electrical supply grid,

- a system behavior of the electrical supply grid,

- a system state of the electrical supply grid,

- a dependency function of a further wind power installation or of a further wind farm,

- an external specification, particularly from the operator of the electrical supply grid, and

- an event in the electrical supply grid, particularly disconnection or reconnection of a grid section.

7. The method as claimed in one of the preceding claims, **characterized in that** the electrical supply grid has a grid frequency and the power indicator is determined from at least one of the variables from the list comprising

- the grid frequency,

- a time derivative of the grid frequency,

- a grid voltage,

- a measured power difference,

- a model frequency modeled on the grid frequency and

- a phase angle between a phase of the grid voltage and a phase of the model frequency.

8. The method as claimed in one of the preceding claims, **characterized in that**

- the amount of balancing energy is calculated from a product of the change in the power indicator and a first adjustable location factor or **in that**, in addition or alternatively,

- the amount of balancing energy is calculated from a product of the power indicator and a second adjustable location factor.

9. The method as claimed in one of the preceding claims, **characterized in that**

- the wind power installation or the wind farm has at least one infeed apparatus for feeding the electrical power into the electrical supply grid and the infeed apparatus has at least one operating range, which is to be satisfied in order to satisfy installation protection or prescribed limit values, wherein
- to feed in the amount of balancing energy, the operating range is departed for a predetermined balancing time interval, in particular at least an upper limit value of the operating range up to a predetermined exceedance value is exceeded, when the infeed of the basic power is increased.

10. The method as claimed in claim 9, **characterized in that**

- to feed in the amount of balancing energy, the operating range is departed from the predetermined balancing time interval in such a way that
- a clock frequency for generating a modulated current signal is reduced and/or
- that a tolerance range for generating a modulated current signal is increased.

11. The method as claimed in one of the preceding claims, **characterized in that**, to feed in the amount of balancing energy,

- rotational energy of the wind power installation is used when the infeed of the basic power is increased, or
- energy is stored as rotational energy in the wind power installation when the infeed of the basic power is reduced and, in addition or alternatively,
- a power cutback of the wind power installation takes place when the infeed of the basic power is reduced.

12. The method as claimed in one of the preceding claims, **characterized in that**

- the wind power installation or at least one of the wind power installations of the wind farm has a generator, which is operated at a generator rotational speed,
- an expected value, which indicates whether a change in the power balance is to be expected, is determined, and
- the rotational speed is changed depending on the expected value when said expected value indicates that a change in the power balance is to be expected.

13. A wind power installation for feeding electrical power into an electrical supply grid at a grid connection point, comprising

- a monitoring means for monitoring a power indicator that is representative of a power balance in the electrical supply grid, wherein the power balance indicates a differential power as the difference between

- power fed into the electrical supply grid by energy generators and
- power drawn from the electrical supply grid by consumers, wherein the power balance is positive when more power is fed in than drawn,

- a determination means for determining an amount of balancing energy depending on the power indicator,
- an infeed apparatus for feeding the electrical power into the electrical supply grid at the grid connection point,
- a control apparatus for controlling the infeed apparatus so that

- the infeed apparatus feeds in a basic electrical power depending on the available wind power and that
- the infeed apparatus changes the infeed of the basic electrical power by the determined amount of balancing energy.

14. The wind power installation as claimed in claim 13, **characterized in that** the wind power installation, in particular the control apparatus, is configured to carry out a method as claimed in one of claims 1 to 12.

15. The wind power installation as claimed in either of claims 13 and 14, **characterized in that** at least one reserve energy store is provided to store a or the energy reserve or a part thereof.

16. The wind power installation as claimed in one of claims 13 to 15, **characterized in that** at least one or the reserve energy store is designed as an energy store that is external to the wind power installation or at least to the infeed apparatus.

17. The wind power installation as claimed in one of claims 13 to 16, **characterized in that**

- the control apparatus has a location factor block for providing a first and/or second location factor, wherein the location factor block has an input at which a variable that influences the location factor can be input and wherein
- the amount of balancing energy is calculated from a product of the change in the power indicator and the first location factor or **in that**, in addition or alternatively,
- the amount of balancing energy is calculated from a product of the power indicator and the second location factor.

**18.** A wind farm having a plurality of wind power installations for feeding electrical power into an electrical supply grid at a grid connection point, comprising

- a farm monitoring means for monitoring a power indicator that is representative of a power balance in the electrical supply grid, wherein the power balance indicates a differential power as the difference between

- power fed into the electrical supply grid by energy generators and
- power drawn from the electrical supply grid by consumers, wherein the power balance is positive when more power is fed in than drawn,

- a farm determination means for determining an amount of balancing energy depending on the power indicator,
- a farm control apparatus for controlling the wind power installations so that

- the wind power installations feed in a basic electrical power depending on the available wind power and that
- the wind power installations change the infeed of the basic electrical power by the determined amount of balancing energy.

**19.** The wind farm as claimed in claim 18, **characterized in that** wind power installations as claimed in one of claims 13 to 17 are used.

**20.** The wind farm as claimed in either of claims 18 and 19, **characterized in that** a farm energy store is provided to store additional energy to provide the amount of balancing energy or a part thereof, and **in that** a farm infeed apparatus is optionally provided to feed energy from the farm energy store into the electrical supply grid.

**21.** The wind farm as claimed in one of claims 18 to 20, **characterized in that**

- the farm control apparatus has a location factor farm block for providing a first and/or second location factor, wherein the location factor farm block has an input at which a variable that influences the location factor can be input and wherein
- the amount of balancing energy is calculated from a product of the change in the power indicator and the first location factor or **in that**, in addition or alternatively,
- the amount of balancing energy is calculated from a product of the power indicator and the second location factor.

**Revendications**

**1.** Procédé d'injection de puissance électrique dans un réseau d'alimentation électrique au moyen d'au moins une éolienne ou d'un parc éolien présentant plusieurs éoliennes sur un point de raccordement au réseau, dans lequel

- plusieurs producteurs d'énergie injectent de la puissance dans le réseau d'alimentation électrique et
- plusieurs consommateurs prélèvent de la puissance provenant du réseau d'alimentation électrique si bien qu'il est obtenu dans le réseau d'alimentation électrique un bilan énergétique entre la puissance injectée et la puissance prélevée qui est positif quand la quantité de puissance injectée est plus importante que celle qui est prélevée, et le procédé comprend les étapes :
- de surveillance d'un indicateur de puissance représentatif du bilan énergétique dans le réseau d'alimentation électrique,
- de définition d'une quantité d'énergie de compensation en fonction de l'indicateur de puissance,
- d'injection d'une puissance de base électrique en fonction de la puissance du vent disponible, et
- de modification de l'injection de la puissance de base électrique de la quantité d'énergie de compensation définie.

**2.** Procédé selon la revendication 1, **caractérisé en ce que**

- est définie pour l'éolienne ou le parc éolien une réserve d'énergie, qui indique une quantité d'énergie qui peut être injectée en plus de la puissance de base électrique dans le réseau d'alimentation électrique, et
- la quantité d'énergie de compensation est définie en fonction de la réserve d'énergie.

**3.** Procédé selon la revendication 1 ou 2, **caractérisé en ce que**

- la définition de la quantité d'énergie de compensation est effectuée pour un intervalle de temps de référence, et
- dans ledit intervalle de temps de référence, l'injection de la puissance de base est augmentée ou réduite, pour modifier ladite quantité d'énergie de compensation.

**4.** Procédé selon l'une quelconque des revendications précédentes, **caractérisé en ce que**

- la quantité d'énergie de compensation est définie de telle sorte, en fonction de l'indicateur de puissance, qu'elle est positive, l'injection de la puissance de base augmente donc quand le bilan énergétique se réduit et est négatif, en particulier lorsqu'il est inférieur à une valeur limite basse prédéfinie, et que
- la quantité d'énergie de compensation est définie de telle sorte, en fonction de l'indicateur de puissance, qu'elle est négative, l'injection de la puissance de base se réduit donc quand le bilan énergétique augmente et est positif, en particulier lorsqu'il est supérieur à une valeur limite haute prédéfinie.

5. Procédé selon l'une quelconque des revendications précédentes, **caractérisé en ce que**

    - la quantité d'énergie de compensation avec une fonction de dépendance dépend de l'indicateur de puissance, et
    - la fonction de dépendance peut être modifiée, et/ou
    - la fonction de dépendance dépend du point de raccordement au réseau.

6. Procédé selon la revendication 5, **caractérisé en ce que** la fonction de dépendance est modifiée, réglée en fonction d'au moins une des informations ou est choisie parmi la liste comprenant :

    - une propriété de système du réseau d'alimentation électrique,
    - un comportement du système du réseau d'alimentation électrique,
    - un état du système du réseau d'alimentation électrique,
    - une fonction de dépendance d'une autre éolienne ou d'un autre parc éolien,
    - une spécification externe, en particulier de l'opérateur du réseau d'alimentation électrique, et
    - un événement dans le réseau d'alimentation électrique, en particulier une déconnexion ou une reconnexion d'un tronçon de réseau.

7. Procédé selon l'une quelconque des revendications précédentes, **caractérisé en ce que** le réseau d'alimentation électrique présente une fréquence de réseau, et
l'indicateur de puissance est défini à partir d'une des grandeurs parmi la liste comprenant

    - la fréquence de réseau,
    - la dérivée de temps de la fréquence de réseau,
    - une tension de réseau,
    - une différence de puissance mesurée,
    - une fréquence de modèle reproduisant la fréquence de réseau, et

    - un angle de phase entre une phase de la tension de réseau et une phase de la fréquence de modèle.

8. Procédé selon l'une quelconque des revendications précédentes, **caractérisé en ce que**

    - la quantité d'énergie de compensation est calculée à partir d'un produit de la modification de l'indicateur de puissance et d'un premier facteur local réglable, ou que par ailleurs ou en variante
    - la quantité d'énergie de compensation est calculée à partir d'un produit de l'indicateur de puissance et d'un deuxième facteur local réglable.

9. Procédé selon l'une quelconque des revendications précédentes, **caractérisé en ce que**

    - l'éolienne ou le parc éolien présente, pour injecter la puissance électrique dans le réseau d'alimentation électrique, au moins un dispositif d'injection et le dispositif d'injection présente au moins une plage de fonctionnement qui doit être respectée pour respecter une protection d'installation ou des valeurs limites prescrites,

dans lequel

    - pour injecter la quantité d'énergie de compensation, la plage de fonctionnement est quittée pour un intervalle de temps de compensation prédéfini, en particulier au moins une valeur limite haute de la plage de fonctionnement est dépassée au maximum d'une valeur de dépassement prédéfinie quand l'injection de la puissance de base est augmentée.

10. Procédé selon la revendication 9, **caractérisé en ce que**

    - pour injecter la quantité d'énergie de compensation, la plage de fonctionnement est quittée pendant l'intervalle de temps de compensation prédéfini de telle manière que
    - une fréquence de cadence est réduite pour générer un signal de courant modulé, et/ou
    - qu'une bande de tolérance est agrandie pour générer un signal de courant modulé.

11. Procédé selon l'une quelconque des revendications précédentes, **caractérisé en ce que** pour injecter la quantité d'énergie de compensation

    - de l'énergie de rotation de l'éolienne est utilisée quand l'injection de la puissance de base est augmentée, ou
    - de l'énergie est injectée en tant qu'énergie de rotation dans l'éolienne quand l'injection de la puissance de base est réduite et par ailleurs ou en variante

- une régulation de puissance de l'éolienne est effectuée quand l'injection de la puissance de base est réduite.

12. Procédé selon l'une quelconque des revendications précédentes, **caractérisé en ce que**

- l'éolienne ou au moins une des éoliennes du parc éolien présente un générateur, qui fonctionne avec une vitesse de rotation de générateur,
- une valeur attendue est définie, laquelle indique si une modification du bilan énergétique doit être attendue, et
- la vitesse de rotation est modifiée en fonction de la valeur attendue quand celle-ci indique qu'une modification du bilan énergétique doit être attendue.

13. Eolienne destinée à injecter de la puissance électrique dans un réseau d'alimentation électrique sur un point de raccordement au réseau, comprenant

- un moyen de surveillance pour surveiller un indicateur de puissance représentatif d'un bilan énergétique dans le réseau d'alimentation électrique, dans laquelle le bilan énergétique indique une puissance différentielle en tant que différence entre
- une puissance injectée par des producteurs d'énergie dans le réseau d'alimentation électrique et
- une puissance prélevée par des consommateurs depuis le réseau d'alimentation électrique, dans laquelle le bilan énergétique est positif quand la quantité de puissance injectée est plus importante que celle qui est prélevée,
- un moyen de définition pour définir une quantité d'énergie de compensation en fonction de l'indicateur de puissance,
- un dispositif d'injection pour injecter la puissance électrique dans le réseau d'alimentation électrique sur le point de raccordement au réseau,
- un dispositif de commande pour commander le dispositif d'injection de telle que

-- le dispositif d'injection injecte une puissance de base électrique en fonction de la puissance du vent disponible, et que
-- le dispositif d'injection modifie l'injection de la puissance de base électrique de la quantité d'énergie de compensation définie.

14. Eolienne selon la revendication 13, **caractérisée en ce que** l'éolienne, en particulier le dispositif de commande, est mise au point pour exécuter un procédé selon l'une quelconque des revendications 1 à 12.

15. Eolienne selon l'une quelconque des revendications 13 et 14, **caractérisée en ce qu'**est prévu au moins un système de stockage d'énergie de réserve pour stocker une ou la réserve d'énergie ou une partie de celle-ci.

16. Eolienne selon l'une quelconque des revendications 13 à 15, **caractérisée en ce qu'**au moins un ou le système de stockage d'énergie de réserve est réalisé en tant que système de stockage d'énergie externe par rapport à l'éolienne ou au moins par rapport au dispositif d'injection.

17. Eolienne selon l'une quelconque des revendications 13 à 16, **caractérisée en ce que**

- le dispositif de commande présente un bloc de facteur local pour fournir un premier et/ou un deuxième facteur local, dans laquelle le bloc de facteur local présente une entrée, sur laquelle une grandeur ayant une incidence sur le facteur local peut être entrée,

et dans laquelle

- la quantité d'énergie de compensation est calculée à partir du produit de la modification de l'indicateur de puissance et du premier facteur local, ou que par ailleurs ou en variante
- la quantité d'énergie de compensation est calculée à partir du produit de l'indicateur de puissance et du deuxième facteur local.

18. Parc éolien avec plusieurs éoliennes pour injecter de la puissance électrique dans un réseau d'alimentation électrique sur un point de raccordement au réseau, comprenant

- un moyen de surveillance de parc pour surveiller un indicateur de puissance représentatif d'un bilan énergétique dans le réseau d'alimentation électrique, dans lequel le bilan énergétique indique une puissance différentielle en tant que différence entre
- une puissance injectée par des producteurs d'énergie dans le réseau d'alimentation électrique et
- une puissance prélevée par des consommateurs depuis le réseau d'alimentation électrique, dans lequel le bilan énergétique est positif quand la quantité de la puissance injectée est plus importante que celle qui est prélevée,
- un moyen de définition de parc pour définir une quantité d'énergie de compensation en fonction de l'indicateur de puissance,
- un dispositif de commande de parc pour commander les éoliennes de telle sorte que

-- les éoliennes injectent une puissance de base électrique en fonction de la puissance du vent disponible, et que
-- les éoliennes modifient l'injection de la puissance de base électrique de la quantité d'énergie de compensation.

19. Parc éolien selon la revendication 18, **caractérisé en ce que** des éoliennes selon l'une quelconque des revendications 13 à 17 sont utilisées.

20. Parc éolien selon l'une quelconque des revendications 18 ou 19, caractérisé qu'un système de stockage d'énergie de parc est prévu pour stocker une énergie supplémentaire pour fournir la quantité d'énergie de compensation ou une partie de celle-ci, et qu'en option un dispositif d'injection de parc est prévu pour injecter de l'énergie provenant du système de stockage d'énergie de parc dans le réseau d'alimentation électrique.

21. Parc éolien selon l'une quelconque des revendications 18 à 20, **caractérisé en ce que**

- le dispositif de commande de parc présente un bloc de parc de facteur local pour fournir un premier et/ou un deuxième facteur local, dans lequel le bloc de parc de facteur local présente une entrée, sur laquelle une grandeur ayant une incidence sur le facteur local peut être entrée, et dans lequel
- la quantité d'énergie de compensation est calculée à partir d'un produit de la modification de l'indicateur de puissance et du premier facteur local ou que par ailleurs ou en variante,
- la quantité d'énergie de compensation est calculée à partir d'un produit de l'indicateur de puissance et du deuxième facteur local.

Fig. 1

Fig. 2

Fig. 3

$$\Delta P = P_1 - P_2 + P_3 + P_4 - P_5 - P_6 + P_7$$
$$P_3 = P_{31} - P_{32} + P_{33}$$

Fig. 4

Fig. 5

EP 3 440 756 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009014012 A1
- DE 102014209541 A1
- US 20150159627 A1
- EP 1665494 B1
- EP 2282053 A1
- WO 2012171532 A2
- DE 102013222452 A1
- EP 2921698 A1
- EP 2999076 A1